# EUROPEAN PATENT SPECIFICATION

(11) **EP 2 340 719 B1**
(45) Date of publication and mention of the grant of the patent: **19.02.2014**
(21) Application number: 09180935.0
(22) Date of filing: 30.12.2009
(51) Int. Cl.: A23C 9/13, A23C 9/154, A23L 1/236, A23L 2/60, A23L 1/22, A23G 9/34, A23G 9/32, A23F 3/16, A23L 2/56

(54) **Aroma composition comprising o-coumaric acid to reduce or suppress undesirable taste impressions of sweeteners**
Aromazusammensetzung mit o-Cumarsäure zur Verringerung oder Unterdrückung von unerwünschten Geschmackseindrücken bei Süßstoffen
Composition d'arome comportant de l'acide o-coumaromique pour réduire ou supprimer les impressions de mauvais goût des édulcorants

(43) Date of publication of application: 06.07.2011
(73) Proprietor: Symrise AG, 37603 Holzminden (DE)
(72) Inventor: Kennison, Deborah, Wayne NJ 07470 (US); Gurney, Martin, East Hanover NJ 07936 (US)
(74) Representative: Fabry, Bernd

(56) References cited:
- EP-A2- 1 258 200
- WO-A1-02/100192
- WO-A1-2007/107596
- WO-A1-2008/112852
- US-A- 5 336 513
- SZEJTLI J ET AL: "Elimination of bitter, disgusting tastes of drugs and foods by cyclodextrins" EUROPEAN JOURNAL OF PHARMACEUTICS AND BIOPHARMACEUTICS, ELSEVIER SCIENCE PUBLISHERS B.V., AMSTERDAM, NL LNKD- DOI:10.1016/J.EJPB.2005.05.006, vol. 61, no. 3, 1 October 2005 (2005-10-01), pages 115-125, XP025317679 ISSN: 0939-6411 [retrieved on 2005-10-01]

## Description

The invention concerns an aroma composition to reduce or suppress undesirable taste impressions, in particular a bitter, astringent and/or sweetener-like taste and/or long-lasting aftertaste of a sweetener, in the oral cavity, comprising (i) one or more sweeteners and (ii) ortho-coumaric acid (OCA) and optionally (iii) one or more specific bitter-masking aroma substances and/or flavourings and optionally (iv) one or more sweetness intensifying aroma substances and/or sweeteners and optionally (v) one or more inactive substances or carriers. The invention also concerns a preparation, containing such an aroma composition. The invention also relates to the use of ortho-coumaric acid or of certrain aroma compositions comprising ortho-coumaric acid for reducing or eliminating undesirable taste effects, in particular a bitter, astringent and/or sweetener-like taste and/or long-lasting aftertaste of a sweetener, and corresponding methods for reducing or eliminating the undesirable taste impression, in particular a bitter, astringent and/or sweetener-like taste and/or long-lasting aftertaste of a sweetener.

Foodstuffs or products consumed for pleasure with a high sugar content (above all sucrose (= saccharose), lactose, glucose or fructose or mixtures of these), are generally afforded much greater preference by consumers on account of their sweetness. On the other hand, it is commonly known that a high content of easily metabolised carbohydrates can greatly increase the blood sugar level, lead to the formation of fatty deposits and ultimately result in health problems such as being overweight, obesity, insulin resistance, adult-onset diabetes and the secondary diseases to these. This situation is made worse in particular by the fact that many of the abovementioned carbohydrates can also have an adverse effect on dental health, since they are broken down in the oral cavity by certain kinds of bacteria to form lactic acid, for example, which can attack the tooth enamel of baby and adult teeth (caries).

Therefore it has long been an aim to reduce the sugar content of foodstuffs and products consumed for pleasure to the absolute minimum necessary. Such a measure is the use of sweeteners: these are chemically uniform substances which in themselves have little or no calorific value and yet at the same time provide a strong sweet taste impression; these substances are generally non-cariogenic (an overview can be found, for example, in the Journal of the American Dietetic Association 2004, 104 (2), 255-275). These non-nutritive, highly intensive sweeteners are in fact well suited in low usage concentrations to providing sweetness to foodstuffs, but unlike sugar often result in taste problems due their time-intensity profiles (for example sucralose, stevioside, cyclamate), a bitter and/or astringent aftertaste (for example acesulfam K, saccharin, stevioside), or marked additional aroma impressions (for example glycyrrhizin acid ammonium salt). Some sweeteners are not particularly stable under heat (for example thaumatin, brazzein, monellin), are not stable in all applications (for example aspartame) and sometimes have a very long-lasting sweetening effect (strong sweet aftertaste, for example saccharin).

In particular, the steviolglycosides that occur naturally in *Stevia* ssp. or *Rubus* ssp. (for example stevioside, rebaudiosides A-G, dulcoside, rubusoside, suaviosides A, B and G - J) are in fact already very good sweeteners, but in the concentrations necessary for an adequate sweetening effect (for example 200 - 600 ppm for rebaudioside A [purity > 90%] in soft drinks, in order to achieve a sweetness corresponding to a 10% concentration) already exhibit a marked liquorice-like and unpleasant bitter and/or astringent taste impressions, in addition often typical further unpleasant taste impressions are observed like a long-lasting aftertaste and a sweetener-like taste profile.

In particular with sweet, calorie-free or very low calorie drinks, which are made using such sweeteners, this unpleasant secondary taste impressions and/or aftertaste often lowers the sensory acceptance and therefore require masking.

In the literature a number of possibilities are described. Thus, US 2004/0142084 describes alkaline metal hydrogen sulphates as masking agents. However, these increase the acid content in applications considerably.

In US 3,924,017 caffeic acid is proposed for masking. The disadvantage here is that caffeic acid itself has a slightly bitter taste and easily suppresses the sweetness, so that more sweetener would have to be used.

In WO 2006/087991 the unpleasant taste is suppressed using alkamides such as spilanthol, but often here the tingling effect of the substance group is undesirable and the range of applications is thus limited.

US 2004/0091589 discloses the use of botanically derived phenylpropenoic acid compounds as color stabilizers in beverages, inter alia mentioning coumaric acid. US 2004/0091589 is silent as to the regioisomers of coumaric acid which can be ortho-, meta- or para-coumaric acid.

An improvement in the taste characteristics, in particular the aftertaste problem of non-nutritive, highly intensive sweeteners can be achieved by the use of tannic acid as, for example, described in WO 98/20753, or phenol acids as in US 3,924,017. Even so, because of their catechol units such substances are not particularly stable in applications and as typical astringents they intensify at the very least this secondary or aftertaste.

The problem for the invention, therefore, was to indicate aroma compositions that reduce the unpleasant impression in the oral cavity left by particular sweeteners, specifically those made from *Stevia ssp.* or *Rubus ssp.,* and preparations of these, in particular foodstuffs, pharmaceuticals and products consumed for pleasure, without losing the sweetening power and in the best case even allowing the quantity of sweeteners to be reduced. In particular one, several or all unpleasant taste impressions selected from the group consisting of bitter, astringent and/or sweetener-like taste and/or long-lasting aftertaste should be improved, i.e. reduced or suppressed.

This problem is solved in accordance with the invention by an aroma composition for reducing or suppressing an unpleasant (taste) impression in the oral cavity, comprising
(i) one or more sweeteners including their physiologically tolerated salts, preferably selected
   - from the group consisting of: magap, sodium cyclamate, acesulfame K, neohesperidin dihydrochalcone, saccharin, saccharin sodium salt, aspartame, superaspartame, neotame, alitame, sucralose, lugduname, carrelame, sucrononate, sucrooctate, and/or
   - from the group of naturally occurring sweeteners, preferably selected from the group consisting of: miraculin, curculin, monellin, mabinlin, thaumatin, curculin, brazzein, pentadin, D-phenylalanine, D-tryptophane, or extracts or fractions derived from natural sources containing these amino acids and/or proteins, neohesperidin dihydrochalcone, steviolgylcoside, stevioside, steviolbioside, rebaudiosides (for example rebaudioside A, rebaudioside B, rebaudioside C, rebaudioside D, rebaudioside E, rebaudioside F, rebaudioside G, rebaudioside H, dulcoside, rubusoside), suavioside A, suavioside B, suavioside G, suavioside H, suavioside I, suavioside J, baiyunoside 1, baiyunoside 2, phlomisoside 1, phlomisoside 2, phlomisoside 3, phlomisoside 4, abrusoside A, abrusoside B, abrusoside C, abrusoside D, cyclocaryoside A and cyclocaryoside I, oslandin, polypodoside A, strogin 1, strogin 2, strogin 4, selligueanin A, dihydroquercetin-3-acetate, perillartine, telosmoside A₁₅, periandrin I-V, pterocaryoside, cyclocaryoside, mukurozioside, trans-anethol, trans-cinnamaldehyde, bryoside, bryonoside, bryonodulcoside, carnosifloside, scandenoside, gypenoside, trilobatin, phloridzin, dihydroflavanol, hematoxylin, cyanin, chlorogenic acid, albiziasaponin, telosmoside, gaudichaudioside, mogroside, hernandulcine, monatin, glycyrrhetin acid and derivatives thereof (for example their glycosides such as glycyrrhizin) or their potassium, sodium, calcium or ammonium salts and phyllodulcin,
      and
(ii) ortho-coumaric acid,
   and optionally
(iii) one or more bitter-masking aroma substances and/or flavourings including their physiologically tolerated salts, in each case preferably selected from the group consisting of:
   - hydroxyflavanones and their physiologically tolerated salts,
   - hydroxybenzoic acid amides, in particular 4-hydroxybenzoic acid vanillyl amides,
   - hydroxydeoxybenzoines,
   - hydroxyphenylalkandiones,
   - diacetyl trimers,
   - gamma-aminobutyric acids, and
   - divanillins,
      and optionally
(iv) one or more additional aroma substances including their physiologically tolerated salts, whereby at least one of these aroma substances is a sweetness intensifying aroma substance and preferably is selected from the group consisting of:
   - hesperetin,
   - 4-hydroxydihydrochalcones, and
   - propenylphenylglycosides (chavicol glycosides)
      and optionally
(v) one or more inactive substances or carriers.

The aroma composition in accordance with the invention as well as preparations comprising an aroma composition according to the present invention, in particular foodstuffs, pharmaceuticals and products consumed for pleasure, show improved taste properties. In particular one, several or all unpleasant taste impressions of sweeteners, in particular unpleasant taste impressions selected from the group consisting of bitter, astringent and/or sweetener-like taste and/or long-lasting aftertaste, are improved, i.e. reduced or suppressed in the aroma composition in accordance with the invention and in preparations comprising an aroma composition in accordance with the invention.

In the aroma composition in accordance with the invention the naturally occurring sweeteners can also be used in the form of extracts or enriched fractions of these extracts, in particular Thaumatococcus extracts (sweet prayers plant), extracts of *Stevia* ssp. (in particular *Stevia rebaudiana),* swingle extract *(Momordica* or *Siratia grosvenorii,* Luo-Han-Guo), extracts of *Glycerrhyzia* ssp. (in particular *Glycerrhyzia glabra*), *Rubus* ssp. (in particular *Rubus suavissimus*), citrus extracts, extracts of *Lippia dulcis* and Buddha tea extracts (*Hydrangea dulcis* or *Hydrangea macrophylla,* called Amacha or other sweet phyllodulcin containing *Hydrangea* species) and corresponding enriched fractions of these extracts.

Ortho-coumaric acid (OCA, 2-coumaric acid, 2-hydroxy cinnamic acid) in accordance with (ii) is a known compound. In the context of the present invention preferably trans-o-coumaric acid (CAS-Number. 614-60-8; trans-2-coumaric acid, trans-2-hydroxycinnamic acid, (E)-3-(2-hydroxyphenyl)-2-propenoic acid) is used. OCA is commercially available and can be of synthetic or of natural origin, naturally OCA being preferred in the context of the present invention. When naturally occurring OCA is employed as (ii), OCA is preferably used in pure form, but OCA can also be used in the form of OCA containing extracts or OCA enriched (fractions of) extracts.

The hydroxyflavanone(s) in accordance with (iii) can in aroma compositions in accordance with the invention preferably be the hydroxyflavanones described in EP 1258200 A2, and can in particular be: 2-(4-hydroxyphenyl)-5,7-dihydroxychroman-4-one (naringenin), 2-(3,4-dihydroxyphenyl)-5,7-dihydroxychroman-4-one (eriodictyol), 2-(3,4-dihydroxyphenyl)-5-hydroxy-7-methoxychroman-4-one (eriodictyol-7-methylether), 2-(3,4-dihydroxyphenyl)-7-hydroxy-5-methoxychroman-4-one (eriodictyol-5-methylether) and 2-(4-hydroxy-3-methoxyphenyl)-5,7-dihydroxychroman-4-one (homoeriodictyol), their (2S) or (2R) enantiomers or mixtures of these and their monovalent or polyvalent phenolate salts with counteracting cation(s), in particular Na⁺, K⁺, NH₄⁺, Ca²⁺, Mg²⁺, Zn²⁺ or Al³⁺ as counteracting cations. Particularly preferred hydroxyflavanones and hydroxyflavanone mixtures are described in more detail below.

In the aroma compositions in accordance with the invention, in accordance with (iii) the hydroxybenzoic acid amide(s) can preferably be those described in WO 2006/024587; particular preference is for 2,4-dihydroxybenzoic acid vanillyl amide, 2,4-dihydroxybenzoic acid-*N*-(4-hydroxy-3-methoxybenzyl)amide, 2,4,6-trihydroxybenzoic acid-*N*-(4-hydroxy-3-methoxybenzyl)amide, 2-hydroxy-benzoic acid-*N*-4-(hydroxy-3-methoxybenzyl)amide, 4-hydroxybenzoic acid-*N*-(4-hydroxy-3-methoxybenzyl)amide, 2,4-dihydroxybenzoic acid-*N*-(4-hydroxy-3-methoxybenzyl)amide-mono-sodium salt, 2,4-dihydroxybenzoic acid-*N*-2-(4-hydroxy-3-methoxyphenyl)ethylamide, 2,4-dihydroxybenzoic acid-*N*-(4-hydroxy-3-ethoxybenzyl)amide, 2,4-dihydroxybenzoic acid-*N-*(3,4-dihydroxybenzyl)amide and 2-hydroxy-5-methoxy-*N*-[2-(4-hydroxy-3-methoxyphenyl)ethyl]amide and 4-hydroxybenzoic acid vanillyl amide. Hydroxydeoxybenzoin(s) in accordance with (iii) of the aroma compositions in accordance with the invention can in particular be those described in WO 2006/106023, and are preferably 2-(4-hydroxy-3-methoxyphenyl)-1-(2,4,6-trihydroxyphenyl)ethanone, 1-(2,4-dihydroxyphenyl)-2-(4-hydroxy-3-methoxyphenyl)ethanone, and/or 1-(2-hydroxy-4-methoxyphenyl)-2-(4-hydroxy-3-methoxyphenyl)ethanone.

The aroma compositions in accordance with the invention can in accordance with (iii) contain one or more hydroxyphenylalkane diones, in particular those described in WO 2007/003527; preference is for gingerdione-[2], gingerdione-[3], gingerdione-[4], dehydrogingerdione-[2], dehydrogingerdione-[3], dehydrogingerdione-[4]).

The aroma compositions in accordance with the invention can in accordance with (iii) also or alternatively contain one or more diacetyl trimers, in particular as described in WO 2006/058893.

Gamma-aminobutyric acid(s) in accordance with (iii) of the aroma compositions in accordance with the invention can in particular be those described in WO 2005/096841, preference being for 4-aminobutyric acid (gamma-aminobutyric acid).

The aroma compositions in accordance with the invention can in accordance with (iii) contain one or more divanillins, in particular those described in WO 2004/078302, with preference for 6,6'-dihydroxy-5,5'-dimethoxy-biphenyl-3,3'-dicarbaldehyde.

Aroma compositions in accordance with the invention can contain one or more 4-hydroxydihydrochalcones in accordance with (iv), in particular those described in EP 1 972 203 A1 and/or the corresponding US 2008/0227867 A1. Particular preference is for 2',4-dihydroxydihydrochalcone or 3-(4-hydroxyphenyl)-1-(2-hydroxyphenyl)propan-1-one, 2',4,4'-trihydroxydihydrochalcone or 3-(4-hydroxyphenyl)-1-(2,4-dihydroxyphenyl)propan-1-one (davidigenin), 2',4,6'-trihydroxydihydrochalcone or r 3-(4-hydroxyphenyl)-1-(2,6-dihydroxyphenyl)propan-1-one, 2',4,4',6'-tetrahydroxydihydrochalcone or 3-(4-hydroxyphenyl)-1-(2,4,6-trihydroxyphenyl)propan-1-o n e (phloretin) 2',4-dihydroxy-3-methoxydihydrochalcone or 3-(4-hydroxy-3-methoxyphenyl)-1-(2-hydroxyphenyl)propan-1-one, 2',4,4'-trihydroxy-3-methoxydihydrochalcone or 3-(4-hydroxy-3-methoxyphenyl)-1-(2,4-dihydroxyphenyl)propan-1-one, 2',4,6'-trihydroxy-3-methoxydihydrochalcone or 3-(4-hydroxy-3-methoxyphenyl)-1-(2,6-dihydroxyphenyl)propan-1-one, 2',4,4',6'-tetrahydroxy-3-methoxydihydrochalcone or 3-(4-hydroxy-3-methoxyphenyl)-1-(2,4,6-trihydroxyphenyl)propan-1-one, 2',3,4,4',6'-tetrahydroxydihydrochalcone or 3-(3,4-dihydroxyphenyl)-1-(2,4,6-trihydroxyphenyl)propan-1-one (3-hydroxyphloretin) and 4,4'-dihydroxy-3-methoxy-dihydrochalcone or 3-(4-hydroxy-3-methoxyphenyl)-1-(4-hydroxyphenyl)propan-1-one.

Hesperetin in the sense of a component in accordance with (iv) of an aroma composition in accordance with the invention can be in particular the (2S) enantiomer, the (2R) enantiomer or a mixture of these enantiomers, as in particular described in WO 2007/014879.

The 4-hydroxydihydrochalcones optionally contained in accordance with (iv) in the aroma compositions in accordance with the invention can in particular be those described in WO 2007/107596.

Aroma compositions in accordance with the invention in accordance with (iv) can contain one or more propenylphenylglycosides (chavicol glycosides), in particular those described in EP 1 955 601 A1 and/or he corresponding US 2008/0220140 A1; preference is for the alpha- or beta-anomers and quite particularly for the beta-anomers of 1-0-[4-(propen-2-enyl)phenyl]-D-glucopyranoside (chavicol glucoside), of 1-0-[4-(propen-2-enyl)phenyl]-6-0-β-D-apiofuranosyl-D-glucopyranoside (furcatin), of 1-0-[4-(propen-2-enyl)phenyl]-6-0-β-D-rutinoside and of 1-0-[4-(propen-2-enyl)phenyl]-O-β-D-xylopyranosyl-(1-6)-β-D-glucopyranoside (p-allylphenylprimeveroside, miyaginin).

Sweeteners in the sense of the invention are non-nutritive or only slightly nutritive, predominantly sweet tasting compounds or predominantly sweet tasting natural extracts or isolates, whereby such natural extracts or isolates do not contain the sweet tasting carbohydrates, in particular sugar or sugar alcohol, in a quantity that is sufficient to bring about a perceptible sweet taste in the preparation. Here the sweeteners in the sense of the invention must solely be in a position to generate a sweetening power in the preparation to be consumed (foodstuff, product consumed for pleasure), which would correspond to the sweetening power of a saccharose concentration of at least 5 %.

Preferred homoeriodictyol potassium salts are those in which the counteracting cation is selected from the group comprising:
monovalent positively charged cations of the first main or auxiliary group, ammonium ion,
trialkylammonium ion, bivalently charged cations of the second main or auxiliary group and trivalent cations of the 3rd main and auxiliary group. Particular preference is for Na⁺, K⁺, Ca²⁺, Mg²⁺ and Zn²⁺.

Also preferred are homoeriodictyol alkaline salts and mixed salts thereof or mixtures with homoeriodictyol calcium salt. Likewise particularly preferred are homoeriodictyol potassium salt and mixed salts thereof or mixtures with homoeriodictyol calcium salt, since these surprisingly have a better solubility compared with pure homoeriodictyol sodium salt.

A preferred aroma composition for reducing or suppressing an unpleasant (taste) impression in the oral cavity, comprises
(i) one or more natural sweeteners selected from the group consisting of:
   thaumatin, brazzein, or extracts or fractions obtained from natural sources and containing these proteins, from neohesperidin dihydrochalcone, stevioside, rebaudioside A, rebaudioside C, dulcosides, mogrosides, monatin, glycyrrhetinic acid or its potassium, sodium, calcium or ammonium salts, glycyrrhizin or its potassium, sodium, calcium or ammonium salts and salts, hernandulcin and phyllodulcin,
   including extracts or enriched fractions of these sweeteners, preferred fractions of these extracts with more than 10% by weight, particularly preferred with more than 50% by weight and quite particularly preferred with more than 90 % by weight of the sweetener concerned in relation to the dry mass of the fraction,
   more preferably selected from the group consisting of extracts and corresponding enriched fractions of: Thaumatococcus extracts (sweet prayers plant), extracts of *Stevia* ssp. (in particular *Stevia rebaudiana*), swingle extract (*Momordica* or *Siratia grosvenorii,* Luo-Han-Guo), extracts of *Glycerrhyzia* ssp. (in particular *Glycerrhyzia glabra*), extracts of *Rubus* ssp. (in particular *Rubus suavissimus*), citrus extracts, extracts of *Lippia dulcis,* Buddha tea extracts (*Hydrangea dulcis* and other phyllodulcin-containing *Hydrangea ssp*.),
   and
(ii) ortho-coumaric acid,
   and optionally
(iii) one, several or all of the bitterness-masking aroma substances and/or flavourings selected from the group consisting of: eriodictyol, sterubin, homoeriodictyol or their physiologically tolerated salts, 2,4-dihydroxybenzoic acid vanillylamide, 2,4,6-trihydroxybenzoic acid-*N*-(4-hydroxy-3-methoxybenzyl)amide, 2,4-dihydroxybenzoic acid-*N*-(4-hydroxy-3-methoxybenzyl)amide monosodium salt, gingerdione-[2], gingerdione-[3], gingerdione-[4], dehydrogingerdione-[2], dehydrogingerdione-[3], dehydrogingerdione-[4]), 4-aminobutyric acid, 6,6'-dihydroxy-5,5'-dimethoxy-biphenyl-3,3'-dicarbaldehyde,
   and optionally
(iv) one or more additional aroma substances, whereby at least one of these aroma substances is a sweetness intensifying aroma substance and is selected from the group consisting of:
   - hesperetin, in particular as described in WO 2007/014879, and in particular the (2S) enantiomer, the (2R) enantiomer or a mixture of these enantiomers,
   - 4-hydroxydihydrochalcones, in particular as described in WO 2007/107596 whereby phloretin is again preferred,
   and optionally
(v) one or more inactive substances or carriers.

Particularly preferred is an aroma composition in accordance with the invention, containing at least one substance from each of the above mentioned groups (i), (ii) and at least on substance from groups (iii) and/or (iv).

More preferably an aroma composition in accordance with the invention comprises at least one substance from each of the above mentioned groups (i), (ii), (iii) and (iv) and optionally of group (v).

Quite particular preferred is an aroma composition in accordance with the invention, containing at least one substance from each of the following groups (i), (ii), (iii) and (iv):
(i) one or more sweeteners selected from the group consisting of: stevioside, rebaudioside A, rebaudioside C, dulcosides, mogrosides, phyllodulcin, glycyrrhetinic acid, an extract of a *Stevia* ssp. (in particular *Stevia rebaudiana*), swingle extract *(Momordica* or *Siratia grosvenorii*), an extract of Luo-Han-Guo, an extract of a *Glycerrhyzia* ssp. (in particular *Glycerrhyzia glabra*), and *Rubus* ssp. (in particular *Rubus suavissimus*), and Buddha tea (*Hydrangea dulcis* and other phyllodulcin-containing *Hydrangea ssp*.),
(ii) ortho-coumaric acid,
(iii) one, several or all the bitterness-masking aroma substances and/or flavourings selected from the group consisting of:
   - homoeriodictyol or homoeriodictyol sodium salt or homoeriodictyol potassium salt or a mixed salt of homoeriodictyol sodium or potassium salt with homoeriodictyol calcium salt,
   - 2,4-dihydroxybenzoic acid vanillyl amide,
   - 2,4-dihydroxybenzoic acid-*N*-(4-hydroxy-3-methoxybenzyl)amide monosodium salt,
   - gingerdione-[2],
   - gingerdione-[3],
      and
(iv) one or more additional aroma substances, whereby at least one of these aroma substances is a sweetness intensifying aroma substance selected from the group consisting of: hesperetin, 4-hydroxydihydrochalcones in particular as described in WO 2007/107596, whereby phloretin is again preferred,
   and optionally
(v) one or more inactive substances or carriers.

More preferred is an aroma composition in accordance with the invention, containing at least one substance from each of the groups:
(i) one or more sweeteners selected from the group consisting of: stevioside, rebaudioside A, rebaudioside C, dulcosides, mogrosides, phyllodulcin, glycyrrhetinic acid, extracts of *Stevia* ssp., particularly preferred are rebaudioside A and extracts of *Stevia* ssp. (in particular *Stevia rebaudiana*),
(ii) ortho-coumaric acid,
(iii) one, several or all the bitterness-masking aroma substances and or flavourings selected from homoeriodictyol or homoeriodictyol sodium salt or homoeriodictyol potassium salt or a mixed salt of homoeriodictyol sodium or potassium salt with homoeriodictyol calcium salt, and
(iv) one or more additional aroma substances, whereby at least one of these aroma substances is a sweetness intensifying aroma substance and is selected from the group consisting of: hesperetin, 4-hydroxydihydrochalcones as described in WO 2007/107596, whereby phloretin is again preferred, and optionally
(v) one or more inactive substances or carriers.

Surprisingly it has been found that the aroma compositions in accordance with the invention can reduce or completely suppress one, several or all unpleasant taste impressions selected from the group consisting of bitter, astringent and/or sweetener-like taste and/or long-lasting aftertaste, in particular a bitter and simultaneously astringent impression from the abovementioned sweeteners (including in corresponding mixtures), without negatively affecting the sweetness in the process. On the contrary: the sweetness frequently is intensified. Here the reduction in the unpleasant bitter and simultaneously astringent sensation can be achieved by alteration, masking or reduction. Reduction in the sense of the invention also includes the mitigation of a bitter and astringent aftertaste of one of the said sweeteners, in particular also if the corresponding unpleasant taste sensation results without the optional substances in accordance with the invention of group (iii) and/or (iv) only in a combination between a sweetener and an additional substance.

Preferred aroma compositions and preparations in accordance with the invention, in particular in the above mentioned preferred embodiments, additionally comprise one or more substances selected from the group consisting of: terpenes, sesquiterpenes, carboxylic acids, terpene alcohols and/or sesquiterpene alcohols.

Such aroma compositions and preparations in accordance with the invention show further improved taste properties, in particular regarding the unpleasant taste impressions of sweeteners, in particular taste impressions of the group consisting of bitter, astringent and/or sweetener-like taste and/or long-lasting aftertaste is further improved, i.e. reduced or suppressed.

Thus, preferred aroma compositions and preparations in accordance with the invention further comprise
- one or more terpenes and/or sesquiterpenes, for example, but not limited to limonene, bisabolene (alpha-, beta- and/or gamma-bisabolene), farnesene (alpha- and/or beta-farnesene) and the like;
   and/or
- one or more carboxylic acids, preferably selected from the group consisting of:
   citric acid, tartaric acid, maleic acid, adipinic acid, succinic acid, malic acid, fumaric acid,
   ascorbic acid (vitamin C) and lactic acid, more preferably citric acid;
   and/or
- one or more terpene alcohols and/or sesquiterpene alcohols (for example, but not limited to bisabolol (alpha- and/or beta-bisabolol), gingerol (preferably 6-, 8- and/or 10-gingerol) and the like).

In aroma compositions and preparations in accordance with the present invention comprising one or more substances selected from terpenes, sesquiterpenes, carboxylic acids, terpene alcohols and/or sesquiterpene alcohols not only on or more undesirable taste impressions of the one or more sweeteners present in said compositions or preparation were effectively reduced or suppressed, in addition an improved (more pronounced) mouthfeel and body of the preparation was observed.

These improved taste effects are in particular observed in aroma compositions and preparations in accordance with the present invention comprising at least
(i) one or more sweeteners selected from the group consisting of: rebaudioside A and extracts of a *Stevia* ssp. (in particular *Stevia rebaudiana*).

In particularly preferred embodiments, the additional one or more substances are selected from the group consisting of: limonene, preferably d-limonene, bisabolene and/or citric acid. In such aroma compositions and preparations according to the present invention the undesirable taste impressions of the one or more sweeteners present in said aroma composition or preparation were particularly effectively reduced or suppressed, in addition an markedly improved (more pronounced) mouthfeel and body of the preparation was observed.

These most preferred aroma compositions have demonstrated quite particularly advantageous characteristics in (carbonated) drinks, so that (in particular carbonated) drinks containing such an aroma composition are likewise the subject matter of this application. Preferred carbonated drinks in accordance with the invention are carbonated fruit-containing soda pops (such as orange, lemon or citrus flavours), carbonated isotonic drinks (for example orange, lemon or citrus flavours), carbonated soft drinks (for example cola, citrus, orange, lemon, cherry, apple or vanilla flavours or mixtures of these), carbonated spritzers, carbonated fruit and vegetable juices, carbonated fruit or vegetable preparations.

Here, in the sense of the invention, carbonated means that the drink contains naturally yielded carbon dioxide (e.g. from fermentation processes as in beer production or from water from carbon dioxide-containing mineral sources) or that this carbon dioxide is added during the manufacturing and/or filling process.

For the (iii) bitterness-masking aroma substance and/or flavouring likewise some natural sources, mainly plant extracts, are known and can be used. For eriodictyol and homoeriodictyol or their physiologically tolerated salts, in particular the, or their sodium, potassium, calcium, magnesium and zinc salts, by way of example extracts of *Eriodictyon* ssp, preferably *Eriodictyon californicum, E. angustifolium* or *E. crassifolium* and for phloretin extracts of *Malus ssp.,* predominantly as apple tree products, for example apple skin extract or enriched apple polyphenol extract, preferably apple skin treated enzymatically with glycosidases or with an acid ion exchanger or enriched apple polyphenol extract in the sense of the invention or can be employed.

The plant extracts can be obtained from the corresponding fresh or dried plants or plant parts, in particular however from plant parts of *Eriodictyon ssp.* or *Malus ssp.* Normally the dried plant parts (for example fresh or dried roots, fruits, seeds, peel, wood, stems, leaves or flower [parts]), preferably in shredded form, are extracted with a solvent suitable for foodstuffs and products consumed for pleasure at temperatures of between 0°C and the boiling point of the respective solvent or solvent mixture, then filtered and the filtrate fully or partially concentrated, preferably by distillation, freeze- or spray-drying. The raw extract obtained in this way can then be further processed, for example by enzymatic treatment (for example with glycosidases to increase the yield of non-sugar-containing molecules), with acid (for example under pressure), with suitable basic solutions such as hydroxides, carbonates or hydrogen carbonates of corresponding (preferably alkaline and/or earth alkaline) metals, in particular of sodium, potassium, calcium, magnesium and zinc, treated with acid ion exchangers or with steam, usually at pressures of between 0.01 mbar and 100 bar, preferably at between 1 mbar and 20 bar, and/or included in a solvent suitable for foodstuffs and products consumed for pleasure. These solutions can also be further treated with basic solutions, for example of hydroxides, carbonates or hydrogen carbonates of preferably sodium, potassium, calcium, magnesium and zinc, whereby this is preferably the cation not used in the respective solution of the manufacturing procedure described previously.

Extraction solvents that are particularly suitable for foodstuffs and products consumed for pleasure are water, ethanol, methanol, propylene glycol, glycerine, acetone, dichloromethane, acetic acid ethyl ester, diethyl ether, hexane, heptane, triacetine, vegetable oils or fats, supercritical carbon dioxide and mixtures thereof.

Preferred inactive substances or carriers (in accordance with (v)) are maltodextrin, starches, natural or synthetic polysaccharides and/or vegetable gums such as modified starch or gum Arabic, solvents permitted for aroma compositions such as for example ethanol, 1,2-propylene glycol, water, glycerine, triacetine, vegetable oil triglycerides, colorants, for example permitted food colourings, colouring vegetable extracts, stabilisers, preservatives, antioxidants and viscosity modifiers.

In a preferred aroma composition in accordance with the invention the components from group (i) are used in a ratio to the components of group (ii) of between 100000 : 1 and 1 : 50, more preferably between 20000 : 1 and 1 : 4, with particular preference for between 10000 : 1 and 1 : 2, most preferably between 5000 : 1 and 10 : 1, whereby the ratio represents the weight ratio of the total weight of the components from group (i) to the total weight of ortho-coumaric acid from group (ii).

Where present the components from group (iii) in accordance with the invention are preferably used in the aroma compositions in accordance with the invention in a ratio of between 10 : 1 and 1 : 1000, more preferably in a ratio of between 1 : 1 and 1 : 300 and particularly preferably between 1 : 3 and 1 :100, whereby the ratio represents the weight ratio of the total weight of the components from group (iii) to the total weight of the components from group (i).

Where present the components from group (iv) in accordance with the invention are preferably used in the aroma compositions in accordance with the invention in a ratio of between 3 : 1 and 1: 1000, more preferably in a ratio of between 1 : 1 and 1 : 300 and particularly preferably between 1 : 2 and 1 :100, whereby the ratio represents the weight ratio of the total weight of the components from group (iv) to the overall total weight of the components from groups (i) and (iii).

Where present in accordance with the invention the components from group (v) are preferably used in a ratio of between 100 : 1 and 1 : 1, more preferably 20 : 1 to 2 : 1, with the ratio representing the total weight ratio of the components from group (v) to the overall total weight of the components from group (i), (iii) and (iv).

A particularly preferred aroma composition in accordance with the invention contains at least one component for intensifying a salty, possibly slightly acidic and/or umami taste impression. Thus the aroma compositions in accordance with the invention are used in combination with at least one (additional) substance suitable for intensifying a pleasant taste impression (salty, umami, possibly slightly acidic). Preference here is for salty-tasting compounds and salt intensifying compounds. Preferred compounds are disclosed in WO 2007/045566. Also preferred are umami compounds as described in WO 2008/046895 and EP 1 989 944 and/or WO 2008/046895 or US 2008/0292763.

A preferred aroma composition in accordance with the invention preferably contains at least one compound that can generate bitter and astringent impressions in the oral cavity, whereby these impressions are reduced and preferably not noticeable as a result of the compounds from groups (i) and (ii) and preferably (iii) that are contained.

Examples of such compounds which may produce bitter and simultaneously astringent and optionally cardboardy, dusty, dry, floury, rancid or metallic impressions in the oral cavity are: xanthine alkaloids, xanthines (caffeine, theobromine, theophylline and methylxanthines), alkaloids (quinine, brucine, strychnine, nicotine), phenolic glycosides (for example salicin, arbutin), flavonoid glycosides (for example neohesperidin, hesperetin-7-O-glucoside, hesperidin, naringin, naringenin-7-O-glucoside, quercitrin, rutin, hyperosides, quercitron, isoquercitrin, avicularin), isoflavonoids or the glycosides thereof (for example daidzin, genistin and the acyl or malonyl esters thereof), bitter tasting chalcones or chalcone glycosides (for example phloridzin, phloretin-2-O'-xyloglucoside, isoxanthohumol), hydrolysable tannins (gallic or ellagic acid esters of carbohydrates, for example pentagalloylglucose), non-hydrolysable tannins (optionally galloylated catechins or epicatechins and the oligomers thereof, for example proanthyocyanidines or procyanidines, thearubigin), flavones (for example quercetin, taxifolin, myricetin) and glycosides thereof (for example rutin, quercitrin), phenols such as for example thymol, eugenol, polyphenols (for example hydroxycinnamic acids and the esters thereof such as gamma-oryzanol, caffeic acid or the esters and derivatives thereof, for example chlorogenic acid, neochlorogenic acid, cryptochlorogenic acid, chlorogenic acid lactone), terpenoid bitter substances (for example limonoids, such as limonin or nomilin from citrus fruits, lupolones and humulones as well as iso-alpha acids from hops), iridoids, secoiridoids, triterpene glycosides such as P57A and related active ingredients from *Hoodia gordonii,* absinthin from wormwood, amarogehtin from gentian, metallic salts from mineral and carboxylic acids (in particular potassium, magnesium and calcium salts, such as potassium chloride), preferred (carboxylic) acids here are citric acid, tartaric acid, phosphoric acid, maleic acid, adipinic acid, succinic acid, malic acid, fumaric acid, ascorbic acid (vitamin C) and lactic acid, potassium gluconate, potassium carbonate, potassium sulphate, potassium lactate, potassium glutamate, potassium succinate, potassium malate, sodium sulphate, magnesium sulphate), pharmaceutical active ingredients (for example fluoroquinolone antibiotics, paracetamol, aspirin, beta.-lactam antibiotics, ambroxol, propylthiouracil [PROP], guaifenesin), vitamins (for example vitamin H, B-series vitamins such as vitamin B1, B2, B6, B12, niacin, pantothenic acid), denatonium benzoate, sucralose octaacetate, iron salts, aluminium salts, zinc salts, urea, unsaturated fatty acids, in particular unsaturated fatty acids in emulsions, bitter-tasting amino acids (for example L-leucine, L-isoleucine, L-valine, L-tryptophan, L-proline, L-histidine, L-tyrosine, L-lysine or L-phenylalanine) and bitter-tasting peptides (in particular peptides with an amino acid from the group comprising L-leucine, L-isoleucine, L-valine, L-tryptophan, L-proline or L-phenylalanine at the N or C terminus) or cyclical dipeptides (for example cyclo-Val-Pro, cyclo-leu-pro).

Preferred substances which taste bitter, astringent, cardboardy, dusty, dry, floury; rancid or metallic are caffeine, theobromine and theophylline, quinine, salicin, arbutin, neohesperidin, naringin, quercitrin, rutin, daidzin, genistin and the acyl or malonyl esters thereof, phloridzin, gallic or ellagic acid esters of carbohydrates (for example pentagalloylglucose), optionally galloylated catechins or epicatechins, proanthyocyanidines or procyanidines, thearubigin, quercetin, taxifolin, myricetin, gamma-oryzanol, caffeic acid or esters thereof (for example chlorogenic acid and isomers), limonoids such as limonin or nomilin from citrus fruits, lupolones and humulones and iso-alpha acids from hops, triterpene glycosides such as P57A and related active ingredients from *Hoodia gordonii,* absinthin from wormwood, amarogentin from gentian, metallic salts (in particular potassium, magnesium and calcium salts, potassium chloride, potassium gluconate, potassium carbonate, potassium sulphate, potassium lactate, potassium glutamate, potassium succinate, potassium malate, sodium sulphate, magnesium sulphate) and pharmaceutical active Ingredients (for example fluoroquinolone antibiotics, paracetamol, aspirin, beta-lactam antibiotics, ambroxol, propylthiouracil [PROP], guaifenesin).

Compounds which may produce a bitter, astringent and optionally cardboardy, chalky, dusty, dry, floury, rancid or metallic aftertaste in the oral cavity may be aroma substances or flavourings having a not unpleasant primary taste (for example sweet, salty, spicy, sour) and/or odour and may belong, for example, to the group comprising sugar substitutes or aroma substances. Examples which may be mentioned are: potassium salts (in particular potassium chloride, potassium gluconate, potassium carbonate, potassium sulphate, potassium lactate, potassium glutamate, potassium succinate, potassium malate).

Here primary taste means the taste impression that is made while the foodstuff, product consumed for pleasure or drink, or other oral preparation is in direct contact with the mucous lining of the oral cavity, in particular with the tongue (as a rule lasting from a few seconds to a few minutes). Aftertaste here means the taste impression that is left once the oral cavity has been emptied by swallowing and/or disgorging and which through the adhesion of residues of the foodstuff, product consumed for pleasure or drink or other oral preparations remains in place and can stay there for between a few minutes and a few hours.

In accordance with that stated above, the aroma compositions in accordance with the invention are particularly well-suited to being combined with mixtures of substances and preparations, in particular foodstuffs, pharmaceutical/medicines, oral care products or products consumed for pleasure, which contain sweeteners, which may generate a bitter and astringent, and optionally a cardboardy, limy, dusty, dry, floury; rancid or metallic (after)taste in the oral cavity. Here particular reference is made to the above list of examples of these compounds.

In accordance with the invention a preparation containing an aroma composition in accordance with the invention is also specified.

Such a preparation is preferably a pharmaceutical preparation, a semi-finished good, intended directly for nutrition or pleasure and/or a preparation for oral care.

Preference is given to preparations according to the invention wherein, relative to the total preparation,
- the concentration of at least one, preferably of the total of all of the components of group (i), lies in the range from 1 to 1000 ppm, preferably from 5 to 1000 ppm, particularly preferably from 5 to 500 ppm;
   and/or
- the total quantity of ortho-coumaric acid from group (ii) is from 0.01 to 50 ppm, preferably from 0.05 to 20 ppm, particularly preferably from 0.05 to 10 ppm:
   and/or
- the total quantity of components from group (iii) is from 0.5 to 300 ppm, preferably from 2 to 150 ppm, particularly preferably from 3 to 150 ppm;
   and/or
- the total quantity of components from group (iv) is from 0.1 to 500 ppm, preferably from 1 to 200 ppm, and particularly preferably from 3 to 100 ppm.

Further preference is given to preparations according to the invention, wherein the total quantity of all the components (i), (ii), (iii) and (iv), relative to the total preparation, lies in the range from 5 to 2000 ppm, preferably in the range from 20 to 1000 ppm, particularly preferably in the range from 40 to 700 ppm.

As already mentioned, one aspect of the present invention relates to the use of the aroma compositions according to the invention to mask or reduce the unpleasant taste impression of a sweetener, i.e. as a flavour-correcting agent. Preferably, the aroma compositions according to the invention are introduced into a pharmaceutical preparation formulated for oral consumption or into a preparation serving for nutrition, oral care or pleasure, wherein the preparation conventionally comprises one or more unpleasant, in particular bitter- and/or astringent-tasting substances.

The proportion of aroma compositions in accordance with the invention in a preparation in accordance with the invention is preferably 0.000001 % by weight to 95 % by weight, in relation to the total weight of the preparation.

Particular preference is given to preparations according to the invention which comprise at least one bitter and one astringent-tasting substance, the amount of the bitter and of the astringent-tasting substance being sufficient to be perceived as an unpleasant taste in a comparison preparation not comprising any aroma composition according to the invention but otherwise identically composed, and the amount of the aroma composition according to the invention in the preparation being sufficient to modify organoleptically, mask or reduce the unpleasant taste impression of the bitter and the astringent-tasting substance in comparison with the comparison preparation.

Preparations according to the invention may also take the form of a semi-finished product, an odoriferous, aroma or flavouring substance composition or a seasoning mixture.

Preparations according to the invention which serve as semi-finished products generally contain 0.0001 % by weight to 95 % by weight, preferably 0.001 to 80 % by weight, in particular 0.01 % by weight to 50 % by weight, relative to the total weight of the preparation, of an aroma composition according to the invention. Preparations according to the invention which are present as semi-finished products may serve to mask or reduce the unpleasant taste impression of finished product preparations which are produced using the semi-finished product preparation.

Preparations serving for nutrition or pleasure for the purposes of the invention are for example bakery products (for example bread, dry biscuits, cakes, other pastry products), confectionery (for example chocolates, chocolate bar products, other bar products, fruit gums, hard and soft caramels, chewing gum), alcoholic or non-alcoholic beverages (for example coffee, tea, iced tea, wine, beverages containing wine, beer, beverages containing beer, liqueurs, spirits, brandies, (carbonated) fruit-containing beverages, (carbonated) isotonic beverages, (carbonated) soft drinks, nectars, spritzers, fruit and vegetable juices, fruit or vegetable juice preparations, instant beverages (for example instant cocoa beverages, instant tea beverages, instant coffee beverages, instant fruit beverages), meat products (for example ham, fresh or cured sausage preparations, spiced or marinated fresh or cured meat products), eggs or egg products (dried egg, egg white, egg yolk), cereal products (for example breakfast cereals, muesli bars, precooked ready rice products), dairy products (for example milk beverages, buttermilk beverages, milk ice cream, yoghurt, kefir, curd cheese, soft cheese, hard cheese, dried milk powder, whey, whey beverages, butter, buttermilk, partially or fully hydrolyzed milk protein-containing products), products made from soya protein or other soya bean fractions (for example soya milk and products made therefrom, fruit beverages with soya protein, soya lecithin-containing preparations, fermented products such as tofu or tempe or products made therefrom), products from other vegetable sources of protein, for example oat protein drinks, fruit preparations (for example jams, fruit ice cream, fruit sauces, fruit fillings, frozen fruit products or fruit sorbets), vegetable preparations (for example ketchup, sauces, dried vegetables, deep-frozen vegetables, precooked vegetables, preserved vegetables), snack articles (for example baked or fried potato chips or potato dough products, maize- or peanut-based extrudates), fat- or oil-based products or emulsions thereof (for example mayonnaise, remoulade, dressings), other ready-to-serve meals and soups (for example dried soups, instant soups, precooked soups), spices, seasoning mixtures and in particular powdered seasonings, which are for example used in snack food applications. The preparations for the purposes of the invention may also be used as semi-finished products for the production of further preparations serving for nutrition or for pleasure. The preparations for the purposes of the invention may also be nutritional supplements in the form of capsules, tablets (uncoated and coated tablets, for example coatings resistant to gastric juices), sugar-coated tablets, granules, pellets, mixtures of solids, dispersions in liquid phases, as emulsions, as powders, as solutions, as pastes or as other swallowable or chewable preparations.

Particularly preferred preparations serving for nutrition or pleasure for the purposes of the invention are alcoholic drinks such as beer mixture drinks, wine mixture drinks or other mixed drinks containing a maximum of 5% by volume of alcohol and/or non-alcoholic drinks such as tea, iced tea (sweetened, for example with herbal flavourings or fruit flavourings such as lemon or orange), (carbonated) fruit-containing soda pops (such as orange, lemon or citrus flavours), (carbonated) isotonic drinks (for example orange, lemon or citrus flavours), carbonated soft drinks (for example cola, citrus, orange, lemon, cherry, apple or vanilla flavours or mixtures of these), nectars, spritzers, milk drinks, buttermilk drinks, yoghurt, kefir, whey drinks, soya milk and products manufactured therefrom, fruit drinks with soya protein, oat protein drinks, and instant drinks (for example instant cocoa beverages, instant tea beverages, instant coffee beverages, instant fruit beverages), so-called flavoured water (near water drinks, whereby the latter must have a sweetening).

Further preferred preparations comprising an aroma composition in accordance with the present invention are selected from the group consisting of cheese, condiments and relishes, egg products, fats and oils, fish products, granulated sugar, gravies, imitation dairy products, jams and jellies, meat products, nut products, other grains, poultry, processed fruits, processed vegetables, reconstituted vegetables, seasonings and flavours, snack foods, sweet sauce, milk products, soups, non-alcoholic beverages, alcoholic beverages, confectionery and frostings, frozen dairy, fruit ices, gelatins and puddings, hard candy, instant coffee, instant tea, soft candy, sugar substitutes, baked goods, breakfast cereals, chewing gum.

Further particularly preferred preparations comprising an aroma composition in accordance with the present invention are selected from the group consisting of milk products, soups, non-alcoholic beverages, alcoholic beverages, confectionery and frostings, frozen dairy, fruit ices, gelatins and puddings, hard candy, instant coffee, instant tea, soft candy, sugar substitutes, baked goods, breakfast cereals, chewing gum.

The total amount of (ii) OCA in the (particularly preferred) preparations in accordance with the present invention, in particular foodstuffs or products consumed for pleasure, preferably is in the range of from 0.05 to 50 ppm, more preferably is in the range of from 0.1 to 20 ppm, even more preferably is in the range of from 0.2 to 10 ppm, in each case based on the total weight of the preparation, foodstuff or product.

Near water drinks for the purposes of the invention are (carbonated) drinks with a (mineral) water basis, which are usually clear, only slightly coloured, often only weakly sweetened (less than 5 % sucrose or sweeteners with a sweetening power of less than 5 % sucrose), usually with little or no acidity and thus with a pH range of 4 to 8, are usually only flavoured and can still be provided with minerals, vitamins and/or plant extracts. Unlike most other drinks (e.g. soda pops, fruit juice drinks, [iced] tea drinks, and so on) here the "water" character of the drink is always still at the forefront.

Preference here is for drinks that have a pH of less than 7, particularly preferably less than 5, and especially preferably less than 4.

Further particularly preferred preparations serving for nutrition or pleasure for the purposes of the invention are dairy products (for example milk beverages, buttermilk beverages, milk ice cream, yoghurt, kefir, curd cheese, soft cheese, dried milk powder, whey, whey beverages, butter, buttermilk, partially or fully hydrolyzed milk protein-containing products), products made from soya protein or other soya bean fractions (for example soya milk and products made therefrom, fruit beverages with soya protein, products from other vegetable sources of protein, for example oat protein drinks, and fruit preparations (for example jams, fruit ice cream, fruit sauces, fruit fillings, frozen fruit products or fruit sorbets). Especially preferred are preparations containing a reduced level of sweet carbohydrates or no added sweet carbohydrates.

Preparations according to the invention serving for oral care are in particular oral and/or dental care products such as toothpastes, tooth gels, tooth powders, mouthwashes, chewing gum and other oral care products.

Pharmaceutical preparations comprise a pharmaceutical active ingredient. Advantageous pharmaceutical active ingredients are for example steroidal anti-inflammatory substances of the corticosteroid type, such as for example hydrocortisone, hydrocortisone derivatives such as hydrocortisone 17-butyrate, dexamethasone, dexamethasone phosphate, methylprednisolone or cortisone.

Advantageous non-steroidal pharmaceutical active ingredients are for example anti-inflammatory drugs such as oxicams such as piroxicam or tenoxicam; salicylates such as Aspirin®, (acetylsalicylic acid), disalcid, solprin or fendosal; acetic acid derivatives such as diclofenac, fenclofenac, indomethacin, sulindac, tolmetin, or clindanac; fenamates such as mefenamic, meclofenamic, flufenamic or niflumic; propionic acid derivatives such as ibuprofen, naproxen, naproxen sodium, flurbiprofen, benoxaprofen or pyrazoles such as phenylbutazone, oxyphenylbutazone, febrazone or azapropazone or other non-steroidal pharmaceutical active ingredients like nicotine, guaifenesin, loperamide, antihistamines, diphenhydramine, bismuths, magnesium, zinc or pseudoephedrine.

Particularly preferred pharmaceutical preparations are products which are not available by prescription only and freely purchasable medicaments, i.e. OTC ("over the counter") preparations, containing active ingredients such as paracetamol, acetylsalicylic acid or ibuprofen, vitamins (for example vitamin H, B-series vitamins such as vitamin B1, B2, B6, B12, niacin, pantothenic acid, preferably in the form of (effervescent) tablets or capsules), minerals (preferably in the form of (effervescent) tablets or capsules) such as iron salts, zinc salts, selenium salts, products containing active ingredients or extracts of ribwort (for example in cough syrup) or St. John's wort.

Further conventional active ingredients, basic materials, inactive substances and additives for preparations serving for nutrition, oral care or pleasure may be present in quantities of 5 to 99.999999 % by weight, preferably of 10 to 80 % by weight, relative to the total weight of the preparation. The preparations may furthermore comprise water in an amount of up to 99.999999 % by weight, preferably of 5 to 80 % by weight, relative to the total weight of the preparation.

The preparations according to the invention, containing the aroma composition according to the invention, are produced according to a preferred development, by incorporating the constituents of groups (i), (ii) and optionally also (iii) and/or (iv) of the aroma composition according to the invention as substances, as a solution or in the form of a mixture with a solid or liquid carrier, into a basic oral pharmaceutical preparation or a basic preparation serving for nutrition, oral care or pleasure. Preparations according to the invention in the form of a solution may advantageously also be converted into a solid preparation by spray drying.

According to a further preferred embodiment, preparations according to the invention may be produced by incorporating the aroma composition according to the invention and optionally other constituents of the preparation according to the invention into emulsions, into liposomes, for example starting from phosphatidyl choline, into microspheres, into nanospheres or also into capsules, granules or extrudates prepared from a matrix suitable for foodstuffs and products consumed for pleasure, for example prepared from starch, starch derivatives, cellulose or cellulose derivatives (for example hydroxypropylcellulose), other polysaccharides (for example alginate), natural fats, natural waxes (for example beeswax, carnauba wax) or from proteins, for example gelatine.

In a further preferred production method, the aroma composition according to the invention is previously complexed with one or more suitable complexing agents, for example with cycloglycans, for example cyclofructans, cyclodextrins or cyclodextrin derivatives, preferably alpha-, gamma- and beta-cyclodextrin, and used in this complexed form.

One preparation which is particularly preferred according to the invention is one in which the matrix is so selected that the aroma composition according to the invention is released by the matrix in a delayed manner, such that a long-lasting effect is obtained.

The further constituents for preparations according to the invention may comprise conventional basic materials, inactive substances and additives for foodstuffs or products consumed for pleasure. Some of these substances have an unpleasant taste in that they have a bitter, astringent effect.

Examples of conventional basic materials, (inactive) substances and additives for preparations according to the invention are water, mixtures of fresh or processed, plant or animal basic or raw materials (for example raw, roasted, dried, fermented, smoked and/or boiled meat, bone, cartilage, fish, vegetables, fruit, herbs, nuts, vegetable or fruit juices or pastes or mixtures thereof), digestible or non-digestible carbohydrates (for example sucrose, maltose, fructose, glucose, HFCS (high-fructose corn syrup), dextrins, amylose, amylopectin, insulin, xylans, cellulose), sugar alcohols (for example erythritol, maltitol, sorbitol, mannitol and the like), natural or hardened fats (for example tallow, lard, palm fat, coconut oil, hardened vegetable fat), oils (for example sunflower oil, peanut oil, maize germ oil, olive oil, fish oil, soy oil, sesame oil, corn oil, rapeseed oil), fatty acids or the salts thereof (for example potassium stearate), proteinogenic or non-proteinogenic amino acids and related compounds (for example taurine), peptides, native or processed proteins (for example gelatine), enzymes (for example peptidases), nucleic acids, nucleotides, taste-correcting agents for unpleasant taste impressions other than those described above, taste-correcting agents for further, generally not unpleasant taste impressions, taste-modulating substances (for example inositol phosphate, nucleotides such as guanosine monophosphate, adenosine monophosphate or other substances such as sodium glutamate or 2-phenoxypropionic acid), emulsifiers (for example lecithins, diacylglycerols), stabilisers (for example carageenan, alginate), preservatives, (for example benzoic acid, sorbic acid), antioxidants (for example tocopherol, ascorbic acid), chelating agents (for example citric acid), organic or inorganic acidulants (for example malic acid, acetic acid, citric acid, tartaric acid, phosphoric acid), additional bitter substances (for example quinine, caffeine, limonin, amarogentin, humulone, lupulone, catechins, tannins), mineral salts (for example sodium chloride, potassium chloride, magnesium chloride, sodium phosphate), substances preventing enzymatic browning (for example sulphite, ascorbic acid), essential oils, plant extracts, natural or synthetic dyes or colouring pigments (for example carotenoids, flavonoids, anthocyans, chlorophyll and the derivatives thereof), spices, synthetic, natural or nature-identical aroma substances or odoriferous substances and odour-correcting agents.

Examples of further basic materials, (inactive) substances and additives for preparations according to the invention are polyphenols other than those belonging to groups (iii) and (iv) of the present invention (for example, but not limited to resveratrol, estradiol, lignans and the like); inulin and other soluble fibers; vitamins, carotenoids and minerals (for example, but not limited to thiamine, niacin, ascorbic acid, calcium, boron, lutein and the like); surfactants and emulsifiers (for example, but not limited to polysorbates, sucrose esters, botanical gums, saponins, mono- and diglycerides, glycerol abietate and the like), polymers and the like, flavour ingredients (for example, but not limited to aldehydes, esters, pyrazines, thiazoles, alcohols, e.g. menthol, ketones, lactones, amides, e.g. transpellitorin, and the like), essential oils (for example, but not limited to citrus and the like), oleoresins, absolutes, concretes; caffeine, quassia, quinine (hydrochloride), guarana, thaumatin, coffee, tea, cocoa and other botanical extractives.

Dental care products (as the basis for preparations serving for oral care) which contain the aroma composition according to the invention preferably comprise an abrasive system (abrasive or polishing agent), such as for example silicas, calcium carbonates, calcium phosphates, aluminium oxides and/or hydroxyapatites, surface-active substances such as for example sodium lauryl sulphate, sodium lauryl sarcosinate and/or cocoamidopropyl betaine, chlorhexidine, cetylpyridinium chloride and the like humectants such as for example glycerol and/or sorbitol, thickeners, such as for example carboxymethylcellulose, polyethylene glycols, carrageenan and/or Laponite®, other taste-correcting agents for unpleasant taste impressions, taste-correcting agents for further, generally not unpleasant taste impressions, taste-modulating substances (for example inositol phosphate, nucleotides such as guanosine monophosphate, adenosine monophosphate or other substances such as sodium glutamate or 2-phenoxypropionic acid), cooling active ingredients such as for example menthol, menthol derivatives (for example L-menthol, L-menthyl lactate, L-menthyl alkylcarbonates, menthone ketals, menthane carboxamides), 2,2,2-trialkylacetamides (for example 2,2-diisopropylpropionic acid methylamide), icilin derivatives, stabilisers and active ingredients, such as for example sodium fluoride, sodium monofluorophosphate, tin difluoride, quaternary ammonium fluorides, zinc citrate, zinc sulphate, tin pyrophosphate, tin dichloride, mixtures of different pyrophosphates, triclosan, cetylpyridinium chloride, aluminium lactate, potassium citrate, potassium nitrate, potassium chloride, strontium chloride, hydrogen peroxide, aromas, sodium bicarbonate and/or odour-correcting agents.

Chewing gums (as a further example of preparations serving for oral care) which contain aroma compositions according to the invention preferably comprise a chewing gum base, i.e. a chewable mass which becomes plastic on chewing, sugars of various kinds, sugar substitutes, sweeteners, sugar alcohols, other taste-correcting agents for unpleasant taste impressions, taste-correcting agents for further, generally not unpleasant taste impressions, taste-modulating substances (for example inositol phosphate, nucleotides such as guanosine monophosphate, adenosine monophosphate or other substances, such as sodium glutamate or 2-phenoxypropionic acid), the cooling active ingredients, humectants, thickeners, emulsifiers, aromas, stabilisers and/or odour-correcting agents mentioned in the previous section.

Preferred preparations according to the invention are preparations serving for nutrition, oral, care or pleasure, with regard to the composition of which the above applies.

The preparations according to the invention serving for nutrition, oral care or pleasure are regularly products which are intended to be introduced into the human oral cavity, to remain there for a specific time and then either to be consumed (for example foodstuffs ready for consumption) or removed from the oral cavity (for example chewing gum or toothpaste). It goes without saying that the use of aroma compositions according to the invention is intended in every type of such products. These products include all substances or products which are intended to be taken into the human oral cavity in the processed, partially processed or unprocessed state. This category also includes substances which are added to foodstuffs during production, processing or treatment thereof and are intended to be introduced into the human oral cavity.

It goes without saying that the aroma compositions according to the invention may be used in particular in foodstuffs. Within the context of the present text, "foodstuff" is taken to mean in particular substances which are intended to be swallowed by a person and then digested in an unmodified, prepared or processed state; foodstuffs are also understood in this respect to mean casings, coatings or other encapsulations which are intended also to be swallowed or for which swallowing is to be anticipated. Certain products which are conventionally removed from the oral cavity (for example chewing gum) are understood in the context of the present text to be foodstuffs, since it is not to be ruled out that they will be swallowed at least in part.

In particular, the aroma compositions according to the invention are used in foodstuffs which are ready for consumption. A foodstuff which is ready for consumption should here be understood to mean a foodstuff which is already fully assembled with regard to the substances which determine the taste of said foodstuff. The phrase "foodstuff ready for consumption" also covers corresponding beverages and solid or semisolid foodstuffs ready for consumption. Examples which may be mentioned are deep-frozen products, which have to be defrosted prior to consumption and heated to consumption temperature. Products such as yogurt or ice cream and also chewing gum or hard caramels count as foodstuffs ready for consumption.

For the purposes of the invention, a preparation (oral care product, also known as oral hygiene product or oral hygiene preparation) serving for oral care is a preparation for cleaning and caring for the oral cavity and the pharynx and for freshening breath. This expressly includes care of the teeth and gums. Dosage forms of customary oral hygiene formulations are creams, gels, pastes, foams, emulsions, suspensions, aerosols, sprays and capsules, granules, pastilles, tablets, candies or chewing gums, this list being understood not to be limiting for the purposes of the present invention.

The aroma compositions according to the invention may also be used, as already stated, in semi-finished foodstuff products. The term semi-finished foodstuff product relates to foodstuffs which are intended only to be consumed after further processing, for example after the addition of aroma or taste substances which are (co)determining with regard to the organoleptic impression.

The present invention further relates to the use of ortho-coumaric acid to reduce or suppress one, several or all unpleasant taste impressions of a sweetener, preferably selected from the group consisting of bitter, astringent and/or sweetener-like taste and/or long-lasting aftertaste.

As stated above, part of the invention also relates to the use of an aroma composition according to the invention (preferably without a compound which may produce bitter, astringent impressions in the oral cavity) to reduce or suppress one, several or all unpleasant taste impressions of a sweetener, preferably selected from the group consisting of bitter, astringent and/or sweetener-like taste and/or long-lasting aftertaste.

It was also found that ortho-coumaric acid or an aroma composition according to the invention are particularly effective if the sweetener is selected from the group consisting of: stevioside, rebaudioside A, rebaudioside C, dulcosides, mogrosides, phyllodulcin, glycyrrhetinic acid, extracts of *Stevia* ssp. (in particular *Stevia rebaudiana*), more particularly if the sweetener is selected from the group consisting of: rebaudioside A and extracts of *Stevia* ssp. (in particular *Stevia rebaudiana*).

When used according to the invention, it may be advantageous for not all the bitter-tasting nuances (the same also applies optionally to the astringent effect) to be masked, since these may also be desirable under certain circumstances.

Part of the invention is also a method of reducing or suppressing one, several or all unpleasant taste impressions of a sweetener, preferably the bitter and/or astringent effect of a sweetener, comprising the following steps:
a) providing a sweetener, which may give unpleasant taste impressions in the oral cavity, in particular a bitter, astringent and/or sweetener-like taste and/or long-lasting aftertaste,
b) providing ortho-coumaric acid as component (ii) and optionally further components of groups (iii), (iv) and/or (v) according to one of the above mentioned (preferred) embodiments, and
c) mixing the components provided in steps a) and b), such that an aroma composition or a preparation according to the present invention is formed,
preferably in an amount and a ratio to one another, such that the sweetener with the unpleasant taste impressions displays one, several or all unpleasant taste impressions to a lesser degree or not at all on introduction of the mixture into the oral cavity.

The invention will be explained further below with the assistance of examples and the claims. The examples serve to clarify the invention, without limiting the scope of protection of the claims. Unless stated otherwise, all data relate to the weight.

### Examples

### Test 1: Flavour modulation effect of OCA and an aroma composition

A carbonated clear lemon-lime beverage was prepared containing 250 ppm of Rebaudioside A. This beverage was used as reference and in the following is referred to as preparation TA.

Preparation TB was identical to preparation TA, additionally containing 0.2 ppm OCA.

Preparation TC was identical to preparation TA, additionally containing 10 ppm of mixture Q. The content of OCA in preparation TC was 0.1 ppm.

Mixture Q consisted of 40.4 wt.% ethanol, 2.5 wt.% water, 1.0 wt.% natural OCA, 0.03 wt.% bisabolene and 56.07 wt.% 1,2-propylene glycol.

The testers judged the strength of the specified types of flavour (descriptors) in each case by awarding scores on a scale of from 1 (very weak corresponding flavour) to 9 (very strong corresponding flavour). The average values of the respective scores are shown.

| **Descriptor** | **Preparation TA** | **Preparation TB** | **Preparation TC** |
|---|---|---|---|
| bitter | 2.7 | 2.0 | 1.0 |
| long-lasting aftertaste | 7.1 | 5.1 | 4.8 |
| sweetener-like | 7.1 | 5.1 | 5.0 |
| astringent | 4.1 | 3.9 | 3.3 |
| mouthfeel, body | 3.7 | 4.1 | 6.5 |

In the tasting performed by a panel of 8 trained testers, preparation TB and preparation TC according to the invention were judged to be clearly superior in comparison to reference preparation TA.

Preparation TB according to the invention was judged to have reduced bitter, astringent and sweetener-like taste impressions and showing a reduced long-lasting aftertaste. In addition, a slightly stronger mouthfeel was observed.

Preparation TC according to the invention was judged to have virtually no bitterness. Preparation TC was also judged to have reduced astringent and sweetener-like taste impressions and a reduced long-lasting aftertaste. In addition, a distinctly stronger mouthfeel was observed.

Additionally, two further preparations according to the present invention were tasted by the trained panel.

Preparation TD was identical to preparation TA, additionally containing OCA in an amount higher than 0.2 ppm, i.e. compared to preparation TB the level of OCA was increased.

In comparison with preparation TB, preparation TD showed a light improved spicy note and a more creamy character.

Preparation TE was identical to preparation TA, additionally containing OCA, bisabolene and citric acid.

Preparation TE in comparison to preparation TB showed a stronger Citrus character and an overall brightener flavour character as well as a further reduced bitterness.

### Test 2: Stability test for OCA in a carbonated soft drink

A carbonated soft drink was prepared consisting of water, 10 ppm trans-o-coumaric acid, 350 ppm Rebaudioside A, 250 ppm sodium benzoate, 150 ppm potassium sorbate, 0.1 wt.-% of lemon/lime extract flavour and 0.15 wt.-% sodium citrate / citric acid. The latter was added to obtain a pH of 3.0 ± 0.2. Said mixture was carbonated with 2.7 volumes of carbon dioxide. This PET-bottled drink was stressed with 5000 Lux at 37°C for 9 days, thereby simulating a storage time (shelf life) of about 9 months at 20°C. At the end of the test the soft drink still contained 8 ppm of OCA, corresponding to an OCA-stability of 80% after a storage time of about 9 months.

### Production of homoeriodictyol potassium salt

The homoeriodictyol potassium salt is produced as described in the examples of WO 2004/041804 A2, whereby for the precipitation a potassium carbonate solution (10 % by weight K₂CO₃ in water) is used instead of sodium hydroxide or sodium carbonate solution. The product is filtered, washed and dried in accordance with the method indicated in said publication.

### Example 1: Aroma compositions

### Preparations A - H: preparations in accordance with the invention

| | Preparation (use in % by weight) | | | | | | | |
|---|---|---|---|---|---|---|---|---|
| Ingredient | A | B | C | D | E | F | G | H |
| o-Coumaric acid | 1.00 | 0.50 | 2.00 | 3.00 | 1.00 | 1.50 | 0.75 | 1.25 |
| Stevioside | 99.00 | | | 91.70 | | | | |
| Rebaudioside A, 90 % purity | | 99.50 | | | 94.54 | | | |
| Rebaudioside A, 98 % purity | | | 98.00 | | | 78.50 | 69.35 | 68.85 |
| Neohesperidin-dihydrochalcone | | | | 0.57 | 0.48 | | 0.70 | 0.70 |
| Homoeriodictyol-sodium salt | | | | | | 16.00 | 23.36 | |
| Homoeriodictyol-potassium salt | | | | | | | | 23.36 |
| Phloretin | | | | 3.78 | 3.18 | 3.20 | 4.67 | 4.67 |
| Hesperetin | | | | 0.95 | 0.80 | 0.80 | 1.17 | 1.17 |

The substance or solutions are mixed and used in the ratios of quantities indicated above.

### Example 2: Aroma solutions

The compositions from Example 1 can also be incorporated in 1,2-propylene glycol or an ethanol/water mixture, for example as a 10% solution, and fully dissolved by gentle heating.

### Example 3: "Lemon" flavoured soft drink

### Preparation according to the invention, containing aroma compositions according to the invention (A-J)

| | Preparation (use as a % by weight) | | | | | | | | | |
|---|---|---|---|---|---|---|---|---|---|---|
| Ingredient | A | B | C | D | E | F | G | H | I | J |
| Aroma composition A from Example 1 | 0.01 | | | | | | | | | |
| Aroma composition B from Example 1 | | 0.02 | | | | | | | | |
| Aroma composition C from Example 1 | | | 0.05 | | | | | | | |
| Aroma composition D from Example 1 | | | | 0.05 | | | | | | |
| Aroma composition E from Example 1 | | | | | 0.05 | | | | | |
| Aroma composition F from Example 1 | | | | | | 0.05 | | | 0.02 | |
| Aroma composition G from Example 1 | | | | | | | 0.05 | | | |
| Aroma composition H from Example1 | | | | | | | | 0.05 | | 0.02 |
| Citric acid | 0.15 | 0.15 | 0.15 | 0.15 | 0.15 | 0.15 | 0.15 | 0.15 | 0.15 | 0.15 |
| "Lemon" aroma | 0.1 | 0.1 | 0.1 | 0.1 | 0.1 | 0.1 | 0.1 | 0.1 | 0.1 | 0.1 |
| Sucrose | | | | | | | | | 6.0 | |
| High fructose corn syrup | | | | | | | | | | 6.0 |
| Water | make up to 100% | | | | | | | | | |

The ingredients are mixed in the order indicated, filled into bottles and carbonated.

### Example 4: "Cola" type soft drink

### Preparation according to the invention containing aroma compositions according to the invention (A-J)

| | Preparation (Use as a % by weight) | | | | | | | | | |
|---|---|---|---|---|---|---|---|---|---|---|
| Ingredient | A | B | C | D | E | F | G | H | I | J |
| Aroma composition A from Example 1 | 0.05 | | | | | | | | | |
| Aroma composition B from Example 1 | | 0.05 | | | | | | | | |
| Aroma composition C from Example 1 | | | 0.05 | | | | | | | |
| Aroma composition D from Example 1 | | | | 0.05 | | | | | | |
| Aroma composition E from Example 1 | | | | | 0.05 | | | | | |
| Aroma composition F from Example 1 | | | | | | 0.05 | | | 0.01 | |
| Aroma composition G from Example 1 | | | | | | | 0.05 | | | |
| Aroma composition H from Example 1 | | | | | | | | 0.05 | | 0.0 1 |
| Phosphoric acid | 0.07 | 0.07 | 0.07 | 0.07 | 0.07 | 0.07 | 0.07 | 0.07 | 0.07 | 0.0 7 |
| Citric acid | 0.06 | 0.06 | 0.06 | 0.06 | 0.06 | 0.06 | 0.06 | 0.06 | 0.06 | 0.0 6 |
| Caramel | 0.14 | 0.14 | 0.14 | 0.14 | 0.14 | 0.14 | 0.14 | 0.14 | 0.14 | 0.1 4 |
| Caffeine | 0.01 | 0.01 | 0.01 | 0.01 | 0.01 | 0.01 | 0.01 | 0.01 | 0.01 | 0.0 1 |
| "Cola" type drink emulsion | 0.05 | 0.05 | 0.05 | 0.05 | 0.05 | 0.05 | 0.05 | 0.05 | 0.05 | 0.0 5 |
| Sucrose | | | | | | | | | 7.0 | |
| High fructose corn syrup | | | | | | | | | | 7.0 |
| Water | make up to 100% | | | | | | | | | |

The ingredients are mixed in the order indicated, filled into bottles and carbonated.

### Example 5: Iced tea drink

### Preparation according to the invention, containing aroma compositions according to the invention (A-H)

| | Preparation (Use as a % by weight) | | | | | | | |
|---|---|---|---|---|---|---|---|---|
| Ingredient | A | B | C | D | E | F | G | H |
| Aroma composition F from Example 1 | 0.03 | | | 0.03 | | | 0.03 | 0.03 |
| Aroma composition G from Example 1 | | 0.03 | | | 0.03 | | | |
| Aroma composition H from Example 1 | | | 0.03 | | | 0.03 | | |
| Citric acid | 0.15 | 0.12 | 0.15 | 0.12 | 0.15 | 0.12 | 0.15 | 0.12 |
| Ascorbic acid | 0.02 | 0.02 | 0.02 | 0.02 | 0.02 | 0.02 | 0.02 | 0.02 |
| Black tea extract | 0.15 | 0.15 | | | 0.15 | 0.15 | | |
| Green tea extract (min. 50 % polyphenols) | | | 0.1 | 0.1 | | | 0.33 | 0.33 |
| Natural "lemon" type aroma | 0.1 | | 0.1 | | 0.1 | | 0.1 | |
| Natural "peach" type aroma | | 0.07 | | 0.07 | | 0.07 | | 0.07 |
| Water | make up to 100% | | | | | | | |

The ingredients are mixed in the order indicated, filled into bottles and carbonated.

### Example 6: Sugar reduced ice cream

### Reference with sugar (A)

### Reference with reduced sugar (B)

### Preparation according to the invention (C- F)

| | **Preparations content in % by weight** | | | | | |
|---|---|---|---|---|---|---|
| **Ingredient** | **A** | **B** | **C** | **D** | **E** | **F** |
| Butter, 82% fat | 12.50 | 12.50 | 12.50 | 12.50 | 12.50 | 12.50 |
| Sugar (sucrose) | 12.00 | 6.00 | 6.00 | 6.00 | 6.00 | 6.00 |
| Skimmed milk powder | 5.00 | 5.00 | 5.00 | 5.00 | 5.00 | 5.00 |
| Glucose syrup 72% | 5.00 | 2.50 | 2.50 | 2.50 | 2.50 | 2.50 |
| Emulsifier SE 30 (Grindstedt Products, Danmark) | 0.65 | 0.65 | 0.65 | 0.65 | 0.65 | 0.65 |
| Vanilla flavour (Product 222292, Symrise) | 0.20 | 0.20 | 0.20 | 0.20 | 0.20 | 0.20 |
| Sorbitol | - | 2.00 | 2.00 | 2.00 | 2.00 | 2.00 |
| Rebaudioside A | - | - | 0.035 | 0.020 | 0.04 | 0.01 |
| Extract from Rubus suavissimus, containing 5 wt.% Rubusoside, e.g. from Plantextract | - | - | - | - | - | 0.010 |
| Hesperetin, 2.5% in 1,2-propylene glycol | - | - | - | - | - | 0.10 |
| Phloretin, 2.5% in 1,2-propylene glycol | - | - | - | - | 0.05 | 0.05 |
| o-Coumaric acid | - | - | 0.00001 | 0.00002 | 0.00005 | 0.0001 |
| Skimmed milk | Up to100% | | | | | |

Skimmed milk and glucose syrup were heated up to 55°C. After melting the butter a blend of the solids and flavour was added. The mixture was heated up to 75°C, and homogenised (50/150 bar). After heating to 89°C the temperature was held for 2 minutes and then cooled down to 2-4°C. After a maturation time of 10 h the ice cream was filled and frozen at -18°C.

### Example 7: Milk shakes

### Reference with sugar (A)

### Reference with reduced sugar (B)

### Preparation according to the invention (C- D)

| | **Preparations content in % by weight** | | | |
|---|---|---|---|---|
| **Ingredient** | **A** | **B** | **C** | **D** |
| Sucrose | 6 | 3 | 3 | - |
| Fructose | - | - | 0.5 | - |
| Rebaudioside A, 98 % purity | - | - | 0.005 | 0.015 |
| Hesperetin | - | - | 0.002 | - |
| Phloretin | - | - | 0.002 | 0.003 |
| Homoeriodictyol-sodium salt | | - | - | 0.002 |
| o-Coumaric acid | - | - | 0.00001 | 0.0002 |
| Milk (UHT), 1.5 % fat | fill up to 100% | | | |

All ingredients were mixed, filled up with milk, stirred well, filled in bottles and stored cool at 5°C.

### Example 8: Fat reduced yoghurt

### Reference with sugar (A)

### Preparation according to the invention (B- D)

| | **Preparations content in % by weight** | | | |
|---|---|---|---|---|
| **Ingredient** | **A** | **B** | **C** | **D** |
| Sucrose | 8 | 5.6 | 5.6 | - |
| Rebaudioside A, 98 % purity | - | 0.01 | 0.02 | 0.04 |
| Hesperetin | - | 0.001 | 0.001 | 0.001 |
| Phloretin | - | - | 0.002 | 0.003 |
| Homoeriodictyol-sodium salt | - | - | - | 0.005 |
| o-Coumaric acid | - | 0.00001 | 0.0002 | 0.004 |
| Yoghurt, 0.1 % fat | Filled up to 100% | | | |

All ingredients were mixed well and stored at 5°C.

### Example 9: Sugar reduced soft drink

### Reference with sugar (A)

### Preparation according to the invention (B- F)

| | **Preparations (amounts in parts by weight)** | | | | | |
|---|---|---|---|---|---|---|
| **Ingredient** | **A** | **B** | **C** | **D** | **E** | **F** |
| Sugar syrup (65% in water) | 154 | 77 | 77 | 77 | 77 | 77 |
| Citric acid (50% in water) | 3 | 3 | 3 | 3 | 3 | 3 |
| Ascorbic acid | 0.5 | 0.5 | 0.5 | 0.5 | 0.5 | 0.5 |
| Orange emulsion | 1 | 1 | 1 | 1 | 1 | 1 |
| Rebaudioside A (98% purity) | - | 0.1 | 0.05 | 0.2 | 0.3 | 0.4 |
| Homoeriodictyol-sodium salt | - | - | 0.02 | | 0.02 | 0.02 |
| Phloretin | - | - | - | 0.02 | | 0.03 |
| Hesperetin | - | - | - | 0.02 | 0.02 | 0.01 |
| o-Coumaric acid | - | 0.0001 | 0.0001 | 0.0001 | 0.0001 | 0.001 |
| Carbonated water | Up to 1000 | Up to 1000 | Up to 1000 | Up to 1000 | Up to 1000 | Up to 1000 |

All ingredients were mixed well and filled up with carbonated water.

## Claims

1. Aroma composition for reducing or suppressing an unpleasant (taste) impression in the oral cavity, comprising
(i) one or more sweeteners including their physiologically tolerated salts, preferably selected
- from the group consisting of: magap, sodium cyclamate, acesulfame K, neohesperidin dihydrochalcone, saccharin, saccharin sodium salt, aspartame, superaspartame, neotame, alitame, sucralose, lugdu-name, carrelame, sucrononate, sucrooctate, and/or
- from the group of naturally occurring sweeteners, preferably selected from the group consisting of: miraculin, curculin, monellin, mobinlin, thaumatin, curculin, brazzein, pentadin, D-phenylalanine, D-tryptophane, or extracts or fractions derived from natural sources containing these amino acids and/or proteins, neohesperidin dihydrochalcone, steviolgylcoside, stevioside, steviolbioside, rebaudiosides (for example rebaudioside A, rebaudioside B, rebaudioside C, rebaudioside D, rebaudioside E, rebaudioside F, rebaudioside G, rebaudioside H, dulcoside, rubusoside), suavioside A, suavioside B. suavioside G, suavioside H, suavioside I, suavioside J, balyunoside 1, balyunoside 2, phlomisoside 1, phlomisoside 2, phlomisoside 3, phlomisoside 4, abrusoside A, abrusoside B, abrusoside C, abrusoside D, cyclocaryoside A and cyclocaryoside I, oslandin, polypodoside A, strogin 1, strogin 2, strogin 4, selligueanin A, dihydroquercetin-3-acetate, perillartine, telosmoside A₁₅, periandrin I-V, pterocaryoside, cyclocaryoside, mukurozioside, trans-anethol, trans-cinnamaldehyde, bryoside, bryonoside, bryonodulcoside, carnosifloside, scandenoside, gypenoside, trilobatin, phloridzin, dihydroflavanol, hematoxylin, cyanin, chlorogenic acid, albiziasaponin, telosmoside, gaudichaudioside, mogroside, hernandulcine, monatin, glycyrrhetin acid and derivatives thereof (for example their glycosides such as glycyrrhizin) or their potassium, sodium, calcium or ammonium salts and phyllodulcin,
and
(ii) ortho-coumaric acid,
and optionally
(iii) one or more bitter-masking aroma substances and/or flavourings including their physiologically tolerated salts, in each case preferably selected from the group consisting of:
- hydroxyflavanones and their physiologically tolerated salts,
- hydroxybenzoic acid amides, in particular 4-hydroxybenzoic acid vanillyl amides,
- hydroxydeoxybenzoines,
- hydroxyphenylalkandiones,
- diacetyl trimers,
- gamma-aminobutyric acids, and
- divanillins,
and optionally
(iv) one or more additional aroma substances including their physiologically tolerated salts, whereby at least one of these aroma substances is a sweetness intensifying aroma substance and preferably is selected from the group consisting of:
- hesperetin,
- 4-hydroxydihydrochalcones, and
- propenylphenylglycosides (chavicol glycosides)
and optionally
(v) one or more inactive substances or carriers.

2. Aroma composition according to claim 1, comprising
(i) one or more natural sweeteners selected from the group consisting of:
thaumatin, brazzein, or exracts or fractions obtained from natural sources and containing these proteins, from neohesperidin dihydrochalcone, stevioside, rebaudioside A, rebaudioside C, dulcosides, mogrosides, monatin, glycyrrhetinic acid or its potassium, sodium, calcium or ammonium salts, glycyrrhizin or its potassium, sodium, calcium or ammonium salts and salts, hernandulcin and phyllodulcin,
including extracts or enriched fractions of these sweeteners, preferred fractions of these extracts with more than 10% by weight, particularly preferred with more than 50% by weight and quite particularly preferred with more than 90 % by weight of the sweetener concerned in relation to the dry mass of the fraction,
more preferably selected from the group consisting of extracts and corresponding enriched fractions of: Thaumatococcus extracts (sweet prayers plant), extracts of *Stevia* ssp. (in particular *Stevia rebaudiana),* swingle extract *(Momordica* or *Siratia grosvenorii,* Luo-Han-Guo), extracts of *Glycerrhyzia* ssp. (in particular *Glycerrhyzia glabra),* extracts of *Rubus* ssp. (In particular *Rubus suavissimus),* citrus extracts, extracts of *Lippia dulcis,* Buddha tea extracts *(Hydrangea dulcis* and other phyllodulcin-containing *Hydrangea ssp.),*
and
(ii) ortho-coumaric acid,
and optionally
(iii) one, several or all of the bitterness-masking aroma substances and/or flavourings selected from the group consisting of: eriodictyol, sterubin, homoeriodictyol or their physiologically tolerated salts, 2,4-dihydroxybenzoic acid vanillylamide, 2,4,6-trihydroxybenzoic acid-N-(4-hydroxy-3-methoxybenzyl)amide, 2,4-dihydroxybenzoic acid-N-(4-hydroxy-3-methoxybenzyl)amide monosodium salt, gingerdione-[2], gingerdione-[3], gingerdione-[4], dehydrogingerdione-[2], dehydrogingerdione-[3], dehydrog-ingerdione-(4]), 4-aminobutyric acid, 6,6'-dihydroxy-5,6-dimethoxy-biphenyl-3,3'-dicarbaldehyde,
and optionally
(iv) one or more additional aroma substances, whereby at least one of these aroma substances is a sweetness intensifying aroma substance and is selected from the group consisting of:
- hesperetin,
- 4-hydroxydihydrochalcones,
and optionally
(v) one or more inactive substances or carriers.

3. Aroma composition in accordance with claim 1 or 2 containing at least one substance from each of the groups (i), (ii) and at least on substance from groups (iii) and/or (iv).

4. Aroma composition in accordance with claim 1 or 2 containing at least one substance from each of the groups (i), (ii), (iii) and (iv) and optionally of group (v).

5. Aroma composition in accordance with one of the above claims containing at least one substance from each of the following groups (i), (ii), (iii) and (iv):
(i) one or more sweeteners selected from the group consisting of: stevioside, rebaudioside A, rebaudioside C, dulcosides, mogrosides, phyllodulcin, glycyrrhetinic acid, an extract of a *Stevia* ssp. (in particular *Stevia rebaudiana*), swingle extract (*Momordica* or Siratla *grosvenorii*), an extract of Luo-Han-Guo, an extract of a *Glycerrhyzia* ssp. (in particular *Glycerrhyzia glabra*), and *Rubus* ssp. (in particular *Rubus suavissimus),* and Buddha tea (*Hy-drangea dulcis* and other phyllodulcin-cantaining *Hydrangea ssp*.),
(ii) ortho-coumaric acid,
(iii) one, several or all the bitterness-masking aroma substances and/or flavourings selected from the group consisting of:
- homoeriodictyol or homoeriodictyol sodium salt or homoeriodictyol potassium salt or a mixed salt of homoeriodictyol sodium or potassium salt with homoeriodictyol calcium salt,
- 2,4-dihydroxybenzoic acid vanillyl amide,
- 2,4-dihydroxybenzoic acid-N-(4-hydroxy-3-methoxybenzyl)amide monosodium salt,
- gingerdione-[2],
- g ingerdione-[3],
and
(iv) one or more additional aroma substances, whereby at least one of these aroma substances is a sweetness intensifying aroma substance selected from the group consisting of: hesperetin and 4-hydroxydihydrochalcones, and optionally
(v) one or more inactive substances or carriers.

6. Aroma composition in accordance with one of the above claims, containing at least one substance from each of the groups (i), (ii), (iii) and (iv):
(i) one or more sweeteners selected from the group consisting of: stevioside, rebaudioside A, rebaudioside C, dulcosides, mogrosides, phyllodulcin, glycyrrhetinic acid, extracts of *Stevia* ssp., in particular rebaudioside A and extracts of *Stevia* ssp. (in particular *Stevia rebaudiana),*
(ii) ortho-coumaric acid,
(iii) one, several or all the bitterness-masking aroma substances and or flavourings selected from homoeriodictyol or homoeriodictyol sodium salt or homoeriodictyol potassium salt or a mixed salt of homoeriodictyol sodium or potassium salt with homoeriodictyol calcium salt,
and
(iv) one or more additional aroma substances, whereby at least one of these aroma substances is a sweetness intensifying aroma substance and is selected from the group consisting of: hesperetin and 4-hydroxydihydrochalcones,
and optionally
(v) one or more inactive substances or carriers.

7. Aroma composition in accordance with one of the above claims, **characterised in that**
- the ratio of the components of group (i) to the components of group (ii) is between 100000 : 1 and 1 : 50, preferably between 20000 : 1 and 1 : 4, with particular preference for between 10000 : 1 and 1 : 2, most preferably between 5000 : 1 and 10 : 1, whereby the ratio represents the weight ratio of the total weight of the components from group (i) to the total weight of ortho-coumaric acid from group (ii),
and/or
- the ratio of the components of group (iii) to the components of group (i) is between 10 : 1 and 1 : 1000, preferably in a ratio of between 1 : 1 and 1 : 300 and particularly preferably between 1 : 3 and 1 :100, whereby the ratio represents the weight ratio of the total weight of the components from group (iii) to the total weight of the components from group (i),
and/or
- the ratio of the total weight of the components of group (iv) to the overall total weight of the components in groups (i) and (iii) is between 3 : 1 and 1: 1000, preferably between 1 : 1 and 1 : 300 and particularly preferably between 1 : 2 and 1 : 100,
and/or
- the ratio of the total weight of the components in group (v) to the overall total weight of the components of groups (i), (iii) and (iv) is between 100 : 1 and 1 : 1, preferably between 20 : 1 and 2 : 1.

8. Aroma composition in accordance with one of the above claims, further comprising one or more substances selected from
- the group of terpenes and sesquiterpenes, preferably selected from the group consisting of: limonene, bisabolene and farnesene,
and/or
- the group of carboxylic acids, preferably selected from the group consisting of: citric acid, tartaric acid, maleic acid, adipinic acid, succinic acid, malic acid, fumaric acid, ascorbic acid and lactic acid,
and/or
- the group of terpene alcohols and sesquiterpene alcohols, preferably selected from the group consisting of bisabolol and gingerol.

9. Preparation containing an aroma composition in accordance with one of the above claims, whereby the preparation is a foodstuff, pharmaceutical, medicinal, or oral hygiene product or a product consumed for pleasure.

10. Preparation in accordance with claim 9, whereby relative to the total preparation, the concentration
- of at least one, preferably of the total of all of the components of group (i), lies in the range from 1 to 1000 ppm, preferably from 5 to 1000 ppm, particularly preferably from 5 to 500 ppm;
and/or
- the total quantity of ortho-coumaric acid from group (ii) is from 0.01 to 50 ppm, preferably from 0.05 to 20 ppm, particularly preferably from 0.05 to 10 ppm:
and/or
- the total quantity of components from group (iii) is from 0.5 to 300 ppm, preferably from 2 to 150 ppm, particularly preferably from 3 to 150 ppm;
and/or
- the total quantity of components from group (iv) is from 0.1 to 500 ppm, preferably from 1 to 200 ppm, and particularly preferably from 3 to 100 ppm.

11. Method of reducing or suppressing one, several or all unpleasant taste impressions of a sweetener, preferably the bitter and/or astringent effect of a sweetener, comprising the following steps:
a) providing a sweetener, which may give unpleasant taste impressions in the oral cavity, in particular a bitter, astringent and/or sweetener-like taste and/or long-lasting aftertaste,
b) providing ortho-coumaric acid as component (ii) and optionally further components of groups (iii), (iv) and/or (v) according to one of claims 1 to 8, and
c) mixing the components provided in steps a) and b), such that an aroma composition according to one of claims 1 to 8 or a preparation of claims 9 or 10 is formed.

12. Use of ortho-coumaric acid to reduce or suppress one, several or all unpleasant taste impressions of a sweetener, preferably selected from the group consisting of bitter, astringent and/or sweetener-like taste and/or long-lasting aftertaste.

13. Use of an aroma composition in accordance with one of claims 1 to 8 to reduce or suppress the bitter, astringent and/or sweetener-like taste and/or long-lasting after-taste of a sweetener.

14. Use in accordance with claim 12 or 13, whereby the sweetener is selected from the group consisting of: stevioside, rebaudioside A, rebaudioside C, dulcosides, mogrosides, phyllodulcin, glycyrrhetinic acid, extracts of *Stevia* ssp. (in particular *Stevia rebaudiana).*

15. Use in accordance with claim 13 or 14 in a preparation, wherein said preparation is a foodstuff, pharmaceutical, medicine or oral hygiene product or a preparation consumed for pleasure.

## Patentansprüche

1. Aromazusammensetzung zum Verringern oder Unterdrücken eines unangenehmen (Geschmack-) Eindruckes in der Mundhöhle, umfassend
(i) einen oder mehrere Süßungsmittel, einschließlich ihrer physiologisch verträglichen Salze, ausgewählt
- aus der Gruppe bestehend aus MAGAP, Natriumcyclamat, Acesulfam K, Neohesperidin-Dihydrochalkon , Saccharin, Saccharin-Natrium-Salz, Aspartam, Superaspartam, Neotam, Alitam, Sucralose, Lugdunam, Carrelam, Sucrononat, Sucrooctat und / oder
- der Gruppe von natürlich vorkommenden Süßstoffe, vorzugsweise aus der Gruppe bestehend aus Miraculin, Curculin, Monellin Mabinlin, Thaumatin, Curculin, Brazzein, Pentadin, D-Phenylalanin, D-Tryptophan, oder Extrakte oder Fraktionen, die aus natürlichen Quellen stammen und diese Aminosäuren und / oder Proteine enthalten, Neohesperidin-Dihydrochalkon, Steviolgylcoside, Steviosid, Steviolbiosid, Rebaudiosiden (z.B. Rebaudiosid A, Rebaudiosid B, Rebaudiosid C, Rebaudiosid D, Rebaudiosid E, Rebaudiosid F, Rebaudiosid G, Rebaudiosid H, Dulcosid, Rubusosid), Suaviosid A, Suaviosid B, Suaviosid G, Suaviosid H, Suaviosid I, Suaviosid J, Baiyunosid 1, Baiyunosid 2, Phlomisosid 1, Phlomisosid 2, Phlomisosid 3, Phlomisosid 4, Abrusosid A, Abrusoside B, Abrusosid C, Abrusosid D, Cyclocaryosid A und Cyclocaryosid I, Oslandin, Polypodosid A, Strogin 1, Strogin2, Strogin 4, Selligueanin A, Dihydroquercetin-3-acetat, Perillartin, Telosmosid A₁₅, Periandrin IV, Pterocaryosid, Cyclocaryosid, Mukuroziosid, trans-Anethol, trans- Cinnamaldehyd, Bryosid, Bryonosid, Bryonodulcosid, Carnosiflosid, Scandenosid, Gypenosid, Trilobtain, Phloridzin, Dihydroflavanol, Hämatoxylin, Cyanin, Chlorogensäure,Albiziasaponin, Telosmosid, Gaudichaudiosid, Mogrosid, Hernandulcine, Monatin, Glycyrrhetinsäure und deren Derivate (z.B. deren Glycoside, wie Glycyrrhizin) oder deren Kalium-, Natrium-, Calcium-oder Ammoniumsalze und Phyllodulcin, und
(ii) ortho-Coumarinsäure,
und optional
(iii) ein oder mehrere bitter-maskierende Aromastoffe und / oder Duftstoffe, einschließlich deren physiologisch verträgliche Salze, in jedem Einzelfall, vorzugsweise ausgewählt aus der Gruppe bestehend aus
- Hydroxyflavanone und deren physiologisch verträglichen Salze,
- Hydroxybenzoesäureamide, insbesondere 4-Hydroxybenzoesäure-vanillyl-amide,
- Hydroxy-desoxybenzoine,
- Hydroxyphenylalkyldione,
- Diacetyltrimere,
- Gamma-Amino-Buttersäuren, und
- Divanilline,
und optional
(iv) eine oder mehrere zusätzliche Aromastoffe einschließlich ihrer physiologisch verträglichen Salze, wobei mindestens eine dieser Aromastoffe ein Süßungsverstärker Aromasubstanz ist und ausgewählt ist aus der Gruppe bestehend aus
- Hesperitin,
- 4-Hydroxy-Dihydrochalkone und
- Propenylphenylglycoside (Chavicol Glycosid)
und optional
(v) eine oder mehrere inaktive Stoffe oder Trägerstoffe.

2. Aromazusammensetzung nach Anspruch 1, umfassend
(i) ein oder mehrere natürliche Süßstoffe ausgewählt aus der Gruppe bestehend aus:
Thaumatin, Brazzein, oder Extrakte oder Fraktionen erhältlich aus natürliche Quellen und die diese Proteine enthalten, von Neohesperidin-Dihydrochalcon, Steviosid, Rebaudiosid A, Rebaudiosid C, Dulcoside, Mogroside, Monatin, Glycyrrhetinsäure oder deren Kalium-, Natrium-, Calcium- oder Ammoniumsalze, Glycyrrhizin oder deren Kalium-, Natrium-, Calcium- oder Ammoniumsalze, Hernandulcin und Phyllodulcin,
einschließlich Extrakte oder angereicherte Fraktionen dieser Süßtoffe, bevorzugt Fraktionen dieser Extrakte mit mehr als 10% Gew., besonders bevorzugt mit mehr als 50% Gew. und ganz besonders bevorzugt mit mehr als 90% Gew. der Süßstoffe bezogen auf das Verhältnis zu der Trockenmasse der Fraktion,
bevorzugter ausgewählt aus der Gruppe enthaltend Extrakte und korrespondierenden angereichten Fraktionen aus: Thaumatococcus Extrakten (Katemfe), Extrakte von *Stevia* ssp. (insbesondere *Stevia rebaudiana),* Extrakte von *Lua-Han-Guo (Momordica oder Siratia grosvenorii,* Luo-Han-Guo), Extrakte von *Glycerrhyzia ssp.* (insbesondere *Glycerrhyzia glabra),* Extrakte von *Rubus ssp.* (insbesondere *Rubus suavissimus),* Zitrusextrakte. Extrakte von *Lippia dulcis,* Extrakte von Buddha Tee (*Hydrangea dulcis* und andere Phyllodulcin-enthaltende *Hydrangea ssp*.),
und
(ii) ortho-Coumarinsäure, und optional
(iii) ein, mehrere oder alle bitter-maskierende Aromastoffe und / oder Duftstoffe ausgewählt aus der Gruppe bestehend aus: Eriodictyol, Sterubin, Homoeriodictyol oder deren physiologisch verträglichen Salze, 2,4-Dihydroxybenzoesäurevanillylamid, 2,4 ,6-Trihydroxybenzoesäure-N-(4-Hydroxy-3-Methoxybenzyl)-amid, 2,4-Dihydroxybenzoesäure-N-(4-Hydroxy-3-Methoxybenzyl)-amid Mononatriumsalz, Gingerdione-[2], Gingerdion-[3], Gingerdion-[4], Dehydrogingerdion-[2], Dehydrogingerdion-[3], Dehydrogingerdion-[4]), 4-Aminobuttersäure, 6,6 '-Dihydroxy-5, 5'-dimethoxy-biphenyl- 3,3 '-dicarbaldehyd,
und optional
(iv) eine oder mehrere zusätzliche Aromastoffe, wobei mindestens eine dieser Aromastoffe ein Süßungsverstärker Aromasubstanz ist und ausgewählt ist aus der Gruppe bestehend aus
- Hesperitin,
- 4-Hydroxy-Dihydrochalkone
und optional
(v) eine oder mehrere inaktive Stoffe oder Trägerstoffe.

3. Aromazusammensetzung nach Anspruch 1 oder 2, enthaltend mindestens eine Substanz aus der jeweiligen Gruppen (i), (ii) und mindestens eine Substanz aus den Gruppen (iii) und / oder (iv).

4. Aromazusammensetzung nach Anspruch 1 oder 2, enthaltend mindestens eine Substanz aus der jeweiligen Gruppen (i), (ii), (iii) und (iv) und optional von Gruppe (v).

5. Aromazusammensetzung nach einem der vorhergehenden Ansprüchen, enthaltend mindestens eine Substanz aus den jeweiligen Gruppen (i), (ii), (iii) und (iv):
(i) eine oder mehrere Süßstoffe ausgewählt aus der Gruppe bestehend aus: Steviosid, Rebaudiosid A, Rebaudiosid C, Dulcoside, Mogroside, Phyllodulcin, Glycyrrhetinsäure, ein Extrakt aus einer *Stevia ssp.* (insbesondere *Stevia rebaudiana),* Extrakte von Lua-Han-Guo *(Momordica* oder *Siratia grosvenorii*), ein Extrakte von Lua-Han-Guo, ein Extrakt von *Glycerrhyzia ssp.* (insbesondere *Glycerrhyzia glabra),* und von *Rubus ssp.* (insbesondere *Rubus suavissimus*), und Buddha Tee *(Hydrangea dulcis* und andere Phyllodulcin-enthaltende *Hydrangea ssp*.),
(ii) ortho-Coumarinsäure,
(iii) ) ein, mehrere oder alle bitter-maskierende Aromastoffe und / oder Duftstoffe ausgewählt aus der Gruppe bestehend aus:
- Homoeriodictyol oder Homoeriodictyol Natriumsalz oder Homoeriodictyol Kaliumsalz oder eine Mischung aus Homoeriodictyol Natriumsalz oder Homoeriodictyol Kaliumsalz mit Homoeriodictyol Calciumsalz,
- 2,4-Dihydroxybenzoesäurevanillylamide,
- 2,4-Dihydroxybenzoesäure-N-(4-Hydroxy-3-Methoxybenzyl)-amid Mononatriumsalz,
- Gingerdione-[2],
- Gingerdion-[3],
und
(iv) eine oder mehrere zusätzliche Aromastoffe, wobei mindestens einer dieser Aromastoffe ein Süßungsverstärker ist und ausgewählt ist aus der Gruppe bestehend aus: Hesperitin und 4-Hydroxy-Dihydrochalkone
und optional
(v) eine oder mehrere inaktive Stoffe oder Trägerstoffe.

6. Aromazusammensetzung nach einem der vorhergehenden Ansprüchen, enthaltend mindestens eine Substanz aus den jeweiligen Gruppen (i), (ii), (iii) und (iv):
(i) eine oder mehrere Süßstoffe ausgewählt aus der Gruppe bestehend aus: Steviosid, Rebaudiosid A, Rebaudiosid C, Dulcoside, Mogroside, Phyllodulcin, Glycyrrhetinsäure, Extrakte von *Stevia ssp.,* bevorzugt Rebaudiosid A und Extrakte von *Stevia ssp.* (insbesondere *Stevia rebaudiana*),
(ii) ortho-Coumarinsäure,
(iii) ein, mehrere oder alle bitter-maskierende Aromastoffe und / oder Duftstoffe ausgewählt aus Homoeriodictyol oder Homoeriodictyol Natriumsalz oder Homoeriodictyol Kaliumsalz oder eine Mischung aus Homoeriodictyol Natriumsalz oder Homoeriodictyol Kaliumsalz mit Homoeriodictyol Calciumsalz,
und
(v) eine oder mehrere inaktive Stoffe oder Trägerstoffe.

7. Aromazusammensetzung nach einem der vorhergehenden Ansprüchen, **dadurch gekennzeichnet, dass**
- das Verhältnis der Komponenten der Gruppe (i) zu den Komponenten der Gruppe (ii) zwischen 100000:1 und 1:50, bevorzugt zwischen 20000:1 und 1:4, besonders bevorzugt zwischen 10000:1 und 1:2, am meisten bevorzugt zwischen 5000:1 und 10:1 ist, wobei das Verhältnis sich auf das Gesamt-Gewichtsanteil der Komponenten in Gruppen (i) zum Gesamtgewichtsanteil von ortho-Coumarinsäure der Gruppe (ii) bezieht,
und /oder
- das Verhältnis der Komponenten der Gruppe (iii) zu den Komponenten der Gruppe (i) zwischen 10:1 und 1:1000, bevorzugt ein Verhältnis zwischen 1:1 und 1:300 und besonders bevorzugt zwischen 1:3 und 1:100 ist, wobei das Verhältnis sich auf das Gesamtgewicht der Komponenten in Gruppen (iii) zum Gesamtgewicht der Komponenten in Gruppen (i) bezieht,
und /oder
- das Gesamtgewicht der Komponenten der Gruppe (iv) zum Gesamtgewicht der Komponenten der Gruppen (i) und (iii) zwischen 3:1 und 1:1000, bevorzugt zwischen 1:1 und 1:300 und besonders bevorzugt zwischen 1:2 und 1:100,
und /oder
- das Gesamtgewicht der Komponenten der Gruppe (v) zum Gesamtgewicht der Komponenten der Gruppen (i), (iii) und (iv) zwischen 100:1 und 1:1, bevorzugt zwischen 20:1 und 2:1 ist.

8. Aromazusammensetzung nach einem der vorhergehenden Ansprüchen, umfassend ein oder mehrere weitere Substanzen ausgewählt aus
- der Gruppe der Terpene und Sesquiterpene, bevorzugt ausgewählt aus der Gruppe bestehend aus:
Limonen, Bisabolene und Farnesene
und / oder
- der Gruppe von Carboxylsäuren, bevorzugt ausgewählt aus der Gruppe bestehend aus: Zitronensäure, Einsäure, Maleinsäure, Adipinsäure, Bernsteinsäure, Apfelsäure, Fumarsäure, Ascorbinsäure und Milchsäure,
und / oder
- der Gruppe von Terpenalkoholen und Sesquiterpen-Alkoholen, bevorzugt ausgewählt aus der Gruppe enthaltend Bisabolol und Gingerol.

9. Zubereitung, enthaltend eine Aromazusammensetzung nach einem der vorhergehenden Ansprüchen, wobei die Zubereitung ein Nahrungsmittel, ein pharmazeutisches Produkt, ein Arzneimittel, ein orales Hygieneprodukt oder ein Genussmittelzubereitung ist.

10. Zubereitung nach Anspruch 9, wobei bezogen auf die gesamte Zubereitung die Konzentration
- des mindestens einen, bevorzugt alle Komponenten der Gruppe (i) im Bereich von 1 bis 1000 ppm, bevorzugt von 5 bis 1000 ppm, besonders bevorzugt von 5 bis 500 ppm liegt;
und / oder
- die Gesamtmenge von ortho-Coumarinsäure aus der Gruppe (ii) von 0.01 bis 50 ppm, bevorzugt
von 0.05 bis 20 ppm, besonders bevorzugt von 0.05 bis 10 ppm ist;
und / oder
- die Gesamtmenge der Komponenten aus der Gruppe (iii) im Bereich von 0.5 bis 300 ppm, bevorzugt von 2 bis 150 ppm, besonders bevorzugt von 3 bis 150 ppm ist;
und/ oder
- die Gesamtmenge der Komponenten aus der Gruppe (iv) im Bereich von 0.1 bis 500 ppm, bevorzugt von 1 bis 200 ppm, besonders bevorzugt von 3 bis 100 ppm ist.

11. Verfahren zum Reduzieren oder Unterdrücken eines, mehrere oder alle unangenehmen Geschmackseindrücke eines Süßungsmittels, bevorzugt der bitteren, adstringierenden Wirkung eines Süßungsmittels, umfassend die folgenden Schritte:
a) Bereitstellung eines Süßungsmittels, das einen unangenehmen Geschmackseindruck in der Mundhöhle hinterlässt, vorzugsweise einen bitteren, adstringierenden und / oder Süßstoffähnlichen Geschmack und / oder langanhaltenden Nachgeschmack,
b) Bereitstellung von ortho-Coumarinsäure als Komponente (ii) und optional weitere Komponenten aus der Gruppe (iii), (iv) und / oder (v) nach einem der Ansprüche 1 bis 8, und
c) Mischen der bereitgestellten Komponenten aus Schritt a) und b), so dass eine Aromazusammensetzung nach einen der Ansprüchen 1 bis 8 oder eine Zubereitung nach den Ansprüchen 9 oder 10 erhalten wird.

12. Verwendung von ortho-Coumarinsäure zum Reduzieren oder Unterdrücken eines, mehrere oder alle unangenehmen Geschmackseindrücke eines Süßungsmittel, bevorzugt ausgewählt aus der Gruppe von bitteren, astringierenden und / oder Süßstoffähnlichen Geschmack und / oder langanhaltenden Nachgeschmack.

13. Verwendung einer Aromazusammensetzung nach einem der Ansprüche 1 bis 8 zum Reduzieren oder Unterdücken von bitteren, astringierenden und / oder Süßstoffähnlichen Geschmack und / oder langanhaltenden Nachgeschmack eines Süßungsmittel.

14. Verwendung nach den Ansprüchen 12 oder 13, wobei das Süßungsmittel ausgewählt ist aus der Gruppe bestehend aus: Steviosid, Rebaudiosid A, Rebaudiosid C, Dulcoside, Mogroside, Phyllodulcin, Glycyrrhetinsäure, Extrakte von *Stevia ssp.* (insbesondere *Stevia rebaudiana*).

15. Verwendung nach den Ansprüchen 13 oder 14 in Zubereitungen, wobei die genannten Zubereitungen ein Nahrungsmittel, pharmazeutisches Produkt, ein Arzneimittel oder ein orales Hygieneprodukt oder ein Genussmittelzubereitung ist.

## Revendications

1. Composition aromatique destinée à réduire ou supprimer une impression (saveur) désagréable dans la cavité orale, comprenant :
(i) un ou plusieurs édulcorants, y compris leurs sels physiologiquement tolérés, choisis de préférence dans :
- le groupe constitué par le magap, le cyclamate de sodium, l'acésulfame K, la néohespéridine dihydrochalcone, la saccharine, la saccharine sel de sodium, l'aspartame, le super-aspartame, le néotame, l'alitame, le sucralose, le lugduname, le carrélame, le sucrononate, le sucrooctate, et/ou
- le groupe constitué par les édulcorants naturellement présents, choisis de préférence dans le groupe constitué par : la miraculine, la curculine, la monelline, la mabinline, la thaumatine, la curculine, la brazzéine, la pentadine, la D-phénylalanine, le D-tryptophane, ou des extraits ou des fractions dérivés de sources naturelles contenant ces acides aminés et/ou ces protéines, la néohespéridine dihydrochalcone, le stéviolglycoside, le stévioside, le stéviolbioside, les rébaudiosides (par exemple, rébaudioside A, rébaudioside B, rébaudioside C, rébaudioside D, rébaudioside E, rébaudioside F, rébaudioside G, rébaudioside H, dulcoside, rubusoside), le suavioside A, le suavioside B, le suavioside G, le suavioside H, le suavioside I, le suavioside J, le baiyunoside 1, le baiyunoside 2, le phlomisoside 1, le phlomisoside 2, le phlomisoside 3, le phlomisoside 4, l'abrusoside A, l'abrusoside B, l'abrusoside C, l'abrusoside D, le cyclocaryoside A et le cyclocaryoside I, l'oslandine, le polypodoside A, la strogine 1, la strogine 2, la strogine 4, la selliguéanine A, le 3-acétate de dihydroquercétine, la périllartine, le télosmoside A₁₅, la périandrine I-V, le ptérocaryoside, le cyclocaryoside, le mukurozioside, le trans-anéthol, le trans-cinnamaldéhyde, le bryoside, le bryonoside, le bryonodulcoside, le carnosifloside, le scandénoside, le gypénoside, la trilobatine, la phloridzine, le dihydroflavanol, l'hématoxyline, la cyanine, l'acide chlorogénique, l'albiziasaponine, le télosmoside, le gaudichaudioside, le mogroside, l'hernandulcine, la monatine, l'acide glycyrrhétinique et des dérivés de celui-ci (par exemple ses glycosides tels que la glycyrrhizine) ou ses sels de potassium, sodium, calcium ou ammonium et la phyllodulcine, et
(ii) l'acide ortho-coumarique,
et éventuellement
(iii) une ou plusieurs substances aromatiques et/ou arômes masquant l'amertume, y compris leurs sels physiologiquement tolérés, choisis dans chaque cas de préférence dans le groupe constitué par :
- les hydroxyflavanones et leurs sels physiologiquement tolérés,
- les acides hydroxybenzoïques amides, en particulier les acides 4-hydroxybenzoïques vanillylamides,
- les hydroxydésoxybenzoïnes,
- les hydroxyphénylalcanediones,
- les trimères diacétyliques,
- les acides gamma-aminobutyriques, et
- les divanillines,
et éventuellement
(iv) une ou plusieurs substances aromatiques supplémentaires, y compris leurs sels physiologiquement tolérés, où au moins l'une de ces substances aromatiques est une substance aromatique intensifiant la sucrosité et est choisie de préférence dans le groupe constitué par :
- l'hespéritine,
- les 4-hydroxydihydrochalcones, et
- les propénylphénylglycosides (chavicol-glycosides)
et éventuellement
(v) un(e) ou plusieurs substances inactives ou véhicules.

2. Composition aromatique selon la revendication 1, comprenant
(i) un ou plusieurs édulcorants naturels choisis dans le groupe constitué par:
la thaumatine, la brazzéine, ou des extraits ou des fractions obtenus à partir de sources naturelles et contenant ces protéines, la néohespéridine dihydrochalcone, le stévioside, le rébaudioside A, le rébaudioside C, les dulcosides, les mogrosides, la monatine, l'acide glycyrrhétinique ou ses sels de potassium, sodium, calcium ou ammonium, la glycyrrhizine ou ses sels de potassium, sodium, calcium ou ammonium, l'hernandulcine et la phyllodulcine,
y compris des extraits ou des fractions enrichies de ces édulcorants, les fractions préférées de ces extraits ayant plus de 10% en poids, particulièrement préférablement plus de 50% en poids et tout particulièrement préférablement plus de 90% en poids de l'édulcorant concerné par rapport à la masse sèche de la fraction,
plus préférablement choisis dans le groupe constitué par les extraits et les fractions enrichies correspondantes d'extraits de *Thaumatococcus* (katemfe), d'extraits de *Stevia* ssp. (en particulier *Stevia rebaudiana*), d'extrait de Luo Han (*Momordica* ou *Siratia grosvenorii,* Luo-Han-Guo), des extraits de *Glycerrhyzia* ssp. (en particulier *Glycerrhyzia glabra*), des extraits de *Rubus* ssp. (en particulier *Rubus suavissimus),* des extraits de *Citrus,* des extraits de *Lippia dulcis,* des extraits d'hortensia (*Hydrangea dulcis* et autres *Hydrangea* ssp. contenant de la phyllodulcine),
et
(ii) de l'acide ortho-coumarique,
et éventuellement
(iii) un ou une, plusieurs ou l'ensemble des substances aromatiques et/ou arômes masquant l'amertume, choisis dans le groupe constitué par : l'ériodictyol, la stérubine, l'homoériodictyol ou leurs sels physiologiquement tolérés, l'acide 2,4-dihydroxybenzoïque vanillyl-amide, l'acide 2,4,6-trihydroxybenzoïque N-(4-hydroxy-3-méthoxybenzyl)amide, l'acide 2,4-dihydroxybenzoïque N-(4-hydroxy-3-méthoxybenzyl)amide sel monosodique, la gingerdione-[2], la gingerdione-[3], la gingerdione-[4], la déshydrogingerdione-[2], la déshydrogingerdione-[3], la déshydrogingerdione-[4], l'acide 4-aminobutyrique, le 6,6'-dihydroxy-5,5'-diméthoxy-biphényl-3,3'-dicarbaldéhyde,
et éventuellement
(iv) une ou plusieurs substances aromatiques supplémentaires, où au moins l'une de ces substances aromatiques est une substance aromatique intensifiant la sucrosité et est choisie dans le groupe constitué par :
- l'hespéritine,
- les 4-hydroxydihydrochalcones,
et éventuellement
(v) un(e) ou plusieurs substances inactives ou véhicules.

3. Composition aromatique selon la revendication 1 ou 2, contenant au moins une substance issue de chacun des groupes (i), (ii) et au moins une substance issue des groupes (iii) et/ou (iv).

4. Composition aromatique selon la revendication 1 ou 2, contenant au moins une substance issue de chacun des groupes (i), (ii), (iii) et (iv) et éventuellement du groupe (v).

5. Composition aromatique selon l'une des revendications précédentes, contenant au moins une substance issue de chacun des groupes (i), (ii), (iii) et (iv) suivants :
(i) un ou plusieurs édulcorants choisis dans le groupe constitué par le stévioside, le rébaudioside A, le rébaudioside C, les dulcosides, les mogrosides, la phyllodulcine, l'acide glycyrrhétinique, un extrait de *Stevia* ssp. (en particulier *Stevia rebaudiana*), l'extrait de Luo Han *(Momordica* ou *Siratia grosvenorii*), un extrait de Luo-Han-Guo, un extrait de *Glycerrhyzia* ssp. (en particulier *Glycerrhyzia glabra*), et de *Rubus* ssp. (en particulier *Rubus suavissimus*), et d'hortensia (*Hydrangea dulcis* et autres *Hydrangea* ssp. contenant de la phyllodulcine),
(ii) de l'acide ortho-coumarique,
(iii) un ou une, plusieurs ou l'ensemble des substances aromatiques et/ou arômes masquant l'amertume, choisis dans le groupe constitué par :
- l'homoériodictyol ou l'homoériodictyol sel de sodium ou l'homoériodictyol sel de potassium ou un sel mixte d'homoériodictyol sel de sodium ou potassium avec un homoériodictyol sel de calcium,
- l'acide 2,4-dihydroxybenzoïque vanillyl-amide,
- l'acide 2,4-dihydroxybenzoïque N-(4-hydroxy-3-méthoxybenzyl)amide sel monosodique,
- la gingerdione-[2],
- la gingerdione-[3],
et
(iv) une ou plusieurs substances aromatiques supplémentaires, où au moins l'une de ces substances aromatiques est une substance aromatique intensifiant la sucrosité et est choisie dans le groupe constitué par l'hespéritine et les 4-hydroxydihydrochalcones,
et éventuellement
(v) un(e) ou plusieurs substances inactives ou véhicules.

6. Composition aromatique selon l'une des revendications précédentes, contenant au moins une substance issue de chacun des groupes (i), (ii), (iii) et (iv):
(i) un ou plusieurs édulcorants choisis dans le groupe constitué par : le stévioside, le rébaudioside A, le rébaudioside C, les dulcosides, les mogrosides, la phyllodulcine, l'acide glycyrrhétinique, des extraits de *Stevia* ssp., en particulier le rébaudioside A et des extraits de *Stevia* ssp. (en particulier *Stevia rebaudiana*),
(ii) de l'acide ortho-coumarique,
(iii) un ou une, plusieurs ou l'ensemble des substances aromatiques et/ou arômes masquant l'amertume choisis parmi l'homoériodictyol ou l'homoériodictyol sel de sodium ou l'homoériodictyol sel de potassium ou un sel mixte d'homoériodictyol sel de sodium ou potassium avec un homoériodictyol sel de calcium,
et
(iv) une ou plusieurs substances aromatiques supplémentaires, où au moins l'une de ces substances aromatiques est une substance aromatique intensifiant la sucrosité et est choisie dans le groupe constitué par l'hespéritine et les 4-hydroxydihydrochalcones,
et éventuellement
(v) un(e) ou plusieurs substances inactives ou véhicules.

7. Composition aromatique selon l'une des revendications précédentes, **caractérisée en ce que**
- le rapport des composants du groupe (i) aux composants du groupe (ii) se trouve entre 100000:1 et 1:50, préférablement entre 20000:1 et 1:4, particulièrement préférablement entre 10000:1 et 1:2, tout préférablement entre 5000:1 et 10:1, où le rapport représente le rapport pondéral du poids total des composants du groupe (i) au poids total de l'acide ortho-coumarique du groupe (ii),
et/ou
- le rapport des composants du groupe (iii) aux composants du groupe (i) se trouve entre 10:1 et 1:1000, préférablement selon un rapport entre 1:1 et 1:300 et particulièrement préférablement entre 1:3 et 1:100, où le rapport représente le rapport pondéral du poids total des composants du groupe (iii) au poids total des composants du groupe (i),
et/ou
- le rapport du poids total des composants du groupe (iv) au poids total global des composants des groupes (i) et (iii) se trouve entre 3:1 et 1:1000, préférablement entre 1:1 et 1:300 et particulièrement préférablement entre 1:2 et 1:100,
et/ou
- le rapport du poids total des composants du groupe (v) au poids total global des composants des groupes (i), (iii) et (iv) se trouve entre 100:1 et 1:1, préférablement entre 20:1 et 2:1.

8. Composition aromatique selon l'une des revendications précédentes, comprenant en outre une ou plusieurs substances choisies parmi
- le groupe des terpènes et sesquiterpènes, choisis de préférence dans le groupe constitué par : le limonène, le bisabolène et le farnesène,
et/ou
- le groupe des acides carboxyliques, choisis de préférence dans le groupe constitué par : l'acide citrique, l'acide tartrique, l'acide maléique, l'acide adipinique, l'acide succinique, l'acide malique, l'acide fumarique, l'acide ascorbique et l'acide lactique, et/ou
- le groupe des alcools terpéniques et des alcools sesquiterpéniques, choisis de préférence dans le groupe constitué par le bisabolol et le gingérol.

9. Préparation contenant une composition aromatique selon l'une des revendications précédentes, **caractérisée en ce que** la préparation est un produit alimentaire, pharmaceutique, médicinal, ou un produit d'hygiène orale ou un produit consommé pour le plaisir.

10. Préparation selon la revendication 9, **caractérisée en ce que** par rapport à la préparation totale, la concentration
- en au moins un, préférablement la totalité de l'ensemble des composants du groupe (i), se trouve dans la plage allant de 1 à 1000 ppm, préférablement de 5 à 1000 ppm, particulièrement préférablement de 5 à 500 ppm ;
et/ou
- la quantité totale d'acide ortho-coumarique du groupe (ii) va de 0,01 à 50 ppm, préférablement de 0,05 à 20 ppm, particulièrement préférablement de 0,05 à 10 ppm:
et/ou
- la quantité totale des composants du groupe (iii) va de 0,5 à 300 ppm, préférablement de 2 à 150 ppm, particulièrement préférablement de 3 à 150 ppm ;
et/ou
- la quantité totale des composants du groupe (iv) va de 0,1 à 500 ppm, préférablement de 1 à 200 ppm, et particulièrement préférablement de 3 à 100 ppm.

11. Méthode de réduction ou de suppression d'une, de plusieurs ou de la totalité des impressions de saveur désagréable d'un édulcorant, préférablement de l'effet amer et/ou astringent d'un édulcorant, comprenant les étapes suivantes, consistant à :
a) fournir un édulcorant, pouvant fournir des impressions de saveur désagréable dans la cavité orale, en particulier une saveur amère, astringente et/ou semblable à un édulcorant et/ou un arrière-goût de longue durée,
b) fournir de l'acide ortho-coumarique comme component (ii) et éventuellement des composants supplémentaires des groupes (iii), (iv) et/ou (v) selon l'une des revendications 1 à 8, et
c) mélanger les composants fournis dans les étapes a) et b), de façon à former une composition aromatique selon l'une des revendications 1 à 8 ou une préparation selon les revendications 9 ou 10.

12. Utilisation d'acide ortho-coumarique afin de réduire ou supprimer une, plusieurs, ou la totalité des impressions de saveur désagréable d'un édulcorant, choisie de préférence dans le groupe constitué par une saveur amère, astringente et/ou semblable à un édulcorant et/ou un arrière-goût de longue durée.

13. Utilisation d'une composition aromatique selon l'une des revendications 1 à 8, afin de réduire ou supprimer la saveur amère, astringente et/ou semblable à un édulcorant et/ou l'arrière-goût de longue durée d'un édulcorant.

14. Utilisation selon la revendication 12 ou 13, **caractérisée en ce que** l'édulcorant est choisi dans le groupe constitué par le stévioside, le rébaudioside A, le rébaudioside C, les dulcosides, les mogrosides, la phyllodulcine, l'acide glycyrrhétinique, les extraits de *Stevia* ssp. (en particulier *Stevia rebaudiana).*

15. Utilisation selon la revendication 13 ou 14 dans une préparation, **caractérisée en ce que** ladite préparation est un produit alimentaire, pharmaceutique, médicinal, ou un produit d'hygiène orale ou une préparation consommée pour le plaisir.
